# EUROPEAN PATENT APPLICATION

(11) **EP 4 391 682 A1**
(43) Date of publication of application: **26.06.2024**
(21) Application number: 22866668.1
(22) Date of filing: 07.09.2022
(51) Int. Cl.: H04W 72/04, H04L 5/00

(54) **COMMUNICATION METHOD, APPARATUS AND SYSTEM**

(30) Priority: 11.09.2021 CN 202111064955
(71) Applicant: Huawei Technologies Co., Ltd., Shenzhen, Guangdong 518129 (CN)
(72) Inventor: HE, Qingchun, Shenzhen, Guangdong 518129 (CN); CHENG, Xingqing, Shenzhen, Guangdong 518129 (CN); LI, Mingchao, Shenzhen, Guangdong 518129 (CN)
(74) Representative: Thun, Clemens
(86) International application number: PCT/CN2022/117651
(87) International publication number: WO 2023/036205

(57) **Abstract**

Embodiments of this application disclose a communication method, apparatus, and system. The method includes: determining a target transmission requirement of a first node (S410); determining, based on the target transmission requirement, whether to establish a first transmission channel (S420), where the first transmission channel is used to communicate with a second node; sending a first request message to the second node (S430), where the first request message is used to request to establish the first transmission channel; and receiving a first response message from the second node (S440), where the first response message is used to confirm establishment of the first transmission channel. In the method, the first transmission channel is dynamically established between the first node and the second node based on the target transmission requirement of the first node, to help flexibly schedule a transmission resource for the first node. The method may be applied to the internet of vehicles, for example, vehicle to everything V2X, a long term evolution-vehicle LTE-V, and vehicle to vehicle V2V

## Description

### CROSS-REFERENCE TO RELATED APPLICATIONS

This application claims priority to Chinese Patent Application No. 202111064955.X, filed with the China National Intellectual Property Administration on September 11, 2021 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

Currently, a three-layer communication protocol architecture based on an application layer, a service layer, and an access layer is defined in a short-range communication system, and a control plane and a user plane are defined in the service layer. The service layer may allocate a default control plane transmission channel to each of functions such as service discovery, multi-domain convergence, and 5G convergence in the control plane, to provide a basic transmission service. These default control plane transmission channels are static channels, and are activated by default after a bearer (namely, a link channel) of the access layer is established, so that a corresponding service can be quickly provided. However, as a business scenario becomes increasingly complex, these default control plane transmission channels cannot meet a transmission requirement in a complex business scenario.

### SUMMARY

Embodiments of this application provide a communication method, apparatus, and system. A first transmission channel is dynamically established between a first node and a second node based on a target transmission requirement of the first node, to help flexibly schedule a communication resource for the first node.

According to a first aspect, an embodiment of this application provides a communication method. The method may be applied to a first node. The first node may be a terminal node, and may communicate with a second node by using a first communication technology.

The method may include: determining a target transmission requirement of the first node; determining, based on the target transmission requirement, whether to establish a first transmission channel, where the first transmission channel is used to communicate with a second node; sending a first request message to the second node, where the first request message is used to request to establish the first transmission channel; and receiving a first response message from the second node, where the first response message is used to confirm establishment of the first transmission channel.

According to the foregoing method, the first node may dynamically establish the first transmission channel with the second node based on the target transmission requirement of the first node. The first transmission channel is not limited to a default configuration. To be specific, neither of the following cases may occur. A transmission requirement cannot be met because a relatively small quantity of static transmission channels are configured by default. A transmission resource is improperly occupied and wasted because a relatively large quantity of static transmission channels are configured by default. This helps improve transmission resource utilization efficiency, and can further meet various different transmission requirements, to adapt to more diversified transmission scenarios.

With reference to the first aspect, in a possible design, the target transmission requirement includes one or more pieces of the following information: a quality of service QoS parameter, a transmission channel parameter, user class information, control plane load information, user plane load information, control offloading information, a service type of a first service, or service feature information of the first service.

According to the foregoing method, the target transmission requirement of the first node may include one or more of the foregoing, to adapt to more diversified transmission scenarios. The first service may be a service supported by the first node (or any protocol layer of the first node), for example, a service implemented in a short-range communication manner, including but not limited to an audio service, a video service, a control function service, and the like. A service implemented in a converged communication scenario includes but is not limited to a short-range communication service and a 5G service in a convergence scenario of a short-range communication technology and a 5G communication technology.

It should be noted that the target transmission requirement in this embodiment of this application is merely an example for describing the transmission requirement of the first node, but is not any limitation. In another embodiment, the target transmission requirement may be alternatively determined based on another parameter or service. This is not limited in this embodiment of this application.

With reference to the first aspect, in a possible design, the first request message includes at least one piece of the following configuration information: address information of the first transmission channel, a source channel identifier of the first transmission channel, a source channel identifier of a first bearer associated with the first transmission channel, and an identifier of the QoS parameter.

According to the foregoing method, the first node may add related configuration information of the first transmission channel to the first request message, to negotiate with the second node to establish the first transmission channel, to adapt to more diversified transmission scenarios. It should be understood that the first request message may further include other configuration information or other information other than the configuration information. Details are not described herein. It should be noted that, in the " source channel identifier" carried in the first request message, the "source" indicates a transmission direction of a message that bears the channel identifier, to be specific, the message is sent from a requester to a responder. The first node is not limited to a source node, and the second node is not limited to a target node. In some embodiments, if roles of the first node and the second node are exchanged, to be specific, if the second node serves as a requester and the first node serves as a responder, the channel identifier carried in the first request message sent by the second node to the first node may be referred to as a "source channel identifier".

With reference to the first aspect, in a possible design, the first response message includes at least one piece of the following confirmation information: the address information of the first transmission channel, a target channel identifier of the first transmission channel, and a target channel identifier of the first bearer associated with the first transmission channel.

According to the foregoing method, the second node may add related confirmation information for the first request message to the first response message, and feed back the first response message to the first node, so that the first node confirms establishment of the first transmission channel. It should be noted that, in this embodiment of this application, the first response message may alternatively include rejection information instead of confirmation information of the first request message. The rejection information may include a target channel identifier of a third transmission channel re-established by the second node for the first node. The third transmission channel may replace the first transmission channel, and is used for communication between the first node and the second node. It should be noted that, in the "target channel identifier" carried in the first response message, the "target" indicates a transmission direction of a message that bears the channel identifier, to be specific, the message is fed back by a responder to a receiver. The first node is not limited to a source node and the second node is not limited to a target node. Similarly, in some embodiments, if roles of the first node and the second node are exchanged, to be specific, if the first node serves as a responder and the second node serves as a requester, the channel identifier carried in the first response message sent by the first node to the second node may be referred to as a "target channel identifier".

It should be understood that, in this embodiment of this application, because the first node and the second node negotiate based on the first request message and the first response message to establish the first transmission channel, for a related configuration of the first transmission channel performed by the first node in the first request message, if the second node agrees with the configuration, confirmation information carried in the first response message fed back by the second node to the first node may be the same configuration information, for example, the source channel identifier of the first transmission channel is the same as the target channel identifier. If the second node does not agree with the configuration, the confirmation information carried in the first response message fed back by the second node to the first node may include related configuration information reconfigured by the second node. For example, the target channel identifier of the first transmission channel included in the first response message is different from the source channel identifier of the first transmission channel included in the first request message. In an optional design, the first response message may further include the source channel identifier of the first transmission channel and/or the source channel identifier of the first bearer.

It should be noted that, in this embodiment of this application, the first transmission channel (or the third transmission channel) established between the first node and the second node may have one channel identifier (in other words, a transmission direction is not distinguished), and is used to uniquely identify the first transmission channel (or the third transmission channel). Both configuration information carried in the first request message and the confirmation information carried in the first response message may include the channel identifier, and are respectively used to request to establish the first transmission channel and confirm establishment of the first transmission channel. Alternatively, the first transmission channel (or the third transmission channel) may have a transmission direction. For example, a direction from a requester (for example, the first node) to a responder (for example, the second node) is an uplink transmission direction, and has an uplink channel identifier used to indicate a transmission direction of uplink information of the first transmission channel. A direction from the responder to the requester is a downlink transmission direction, and has an uplink channel identifier used to indicate a transmission direction of downlink information of the first transmission channel. Accordingly, the source channel identifier carried in the first request message may include a source uplink channel identifier and a source downlink channel identifier that are configured by the first node for the first transmission channel, and the target channel identifier carried in the first response message may include a target uplink channel identifier and a target downlink channel identifier of the first transmission channel for which the second node confirms establishment. A specific implementation of the channel identifier of the first transmission channel (or the third transmission channel) is not limited in this embodiment of this application.

With reference to the first aspect, in a possible design, a communication protocol architecture of the first node includes an application layer, a service layer, and an access layer

With reference to the first aspect, in a possible design, the determining, based on the target transmission requirement, to establish a first transmission channel includes: determining, by the service layer based on the target transmission requirement, to establish the first transmission channel; or determining, by the service layer based on a second request message from the application layer, to establish the first transmission channel, where the second request message is used to indicate the target transmission requirement.

According to the foregoing method, the service layer of the first node may be used as a decision body to determine whether to trigger a dynamic channel establishment procedure, to adapt to more diversified transmission scenarios.

With reference to the first aspect, in a possible design, the method further includes: sending, by the service layer, a third request message to the access layer, where the third request message is used to request to configure the first bearer associated with the first transmission channel; and receiving, by the service layer, a third response message from the access layer, where the third response message is used to confirm configuration of the first bearer.

According to the foregoing method, the service layer of the first node may first request the access layer of the first node to configure the first bearer, to establish the first transmission channel in association with the first bearer, thereby establishing a corresponding transmission bearer between different protocol layers of the first node.

With reference to the first aspect, in a possible design, the method further includes: receiving, by the access layer, the third request message from the service layer; and determining, by the access layer, the first bearer from a preconfigured or predefined bearer of the first node and the second node.

According to the foregoing method, the access layer of the first node may determine, from an access layer bearer previously existing between the first node and the second node, the first bearer that meets the target transmission requirement. Therefore, the first node may directly reuse the existing bearer as the first bearer, thereby reducing occupation of access layer channel resources.

With reference to the first aspect, in a possible design, a communication protocol architecture of the second node includes an access layer, and the method further includes: receiving, by the access layer of the first node, the third request message from the service layer of the first node; sending, by the access layer of the first node, a fourth request message to the access layer of the second node based on the third request message, where the fourth request message is used to request to configure the first bearer; receiving, by the access layer of the first node, a fourth response message from the access layer of the second node, where the fourth response message is used to confirm configuration of the first bearer; and sending, by the access layer of the first node, the third response message to the service layer of the first node based on the fourth response message.

According to the foregoing method, the access layer of the first node may request, from the access layer of the second node, to configure the first bearer that meets the target transmission requirement, and the access layer of the second node may feed back a response message (or referred to as a reconfiguration message) to the access layer of the first node to confirm configuration of the first bearer. Therefore, the access layer of the second node may configure, for the access layer of the first node, the first bearer that better meets the target transmission requirement of the first node.

With reference to the first aspect, in a possible design, a communication protocol architecture of the second node includes an access layer, and the method further includes: receiving, by the access layer of the first node, the third request message from the service layer of the first node; receiving, by the access layer of the first node, a reconfiguration message from the access layer of the second node, where the reconfiguration message is used to indicate to configure the first bearer; and sending, by the access layer of the first node, the third response message to the service layer of the first node based on the reconfiguration message.

According to the foregoing method, the access layer of the second node may actively deliver a reconfiguration message to the access layer of the first node based on some basic parameters reported by the first node during registration, for example, a node type, a service type, and a QoS parameter, to schedule and configure the first bearer for the access layer of the first node. The first bearer may meet a general transmission requirement of the first node. Therefore, the first node does not need to request configuration, signaling interaction between the first node and the second node can be reduced, and signaling overheads can be reduced.

With reference to the first aspect, in a possible design, the communication protocol architecture of the second node includes a service layer, and the sending a first request message to the second node includes: sending, by the service layer of the first node, the first request message to the service layer of the second node; and the receiving a first response message from the second node includes: receiving, by the service layer of the first node, the first response message from the second node.

According to the foregoing method, the service layer of the first node may be used as a decision body to trigger a dynamic channel establishment procedure with the second node.

With reference to the first aspect, in a possible design, the method further includes: establishing, by the service layer of the first node, at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type. Optionally, the method further includes: synchronizing the at least one mapping relationship between the service layer of the first node and the access layer and/or the application layer of the first node.

According to the foregoing method, the service layer of the first node may establish a mapping relationship between the first transmission channel and other information, and synchronize the mapping relationship to another protocol layer, so that each protocol layer subsequently provides a corresponding transmission service for the first node based on the mapping relationship.

With reference to the first aspect, in a possible design, the service layer of the first node supports at least two protocol stacks, and the first transmission channel is reused by data packets based on the at least two protocol stacks, where the data packets of the at least two protocol stacks include indication information, and the indication information indicates an association relationship between a data packet and a protocol stack; or the first bearer is associated with a second transmission channel that is configured by default, and data packets based on the at least two protocol stacks are separately transmitted to the second node through the first transmission channel or the second transmission channel.

According to the foregoing method, the at least two protocol stacks supported by the service layer of the first node may reuse a same transmission channel, or an association relationship between a data packet and a protocol stack is indicated by using indication information included in the data packet, thereby helping reduce a problem of a transmission error of data packets from different protocol stacks, and reducing occupation of transmission resources. Alternatively, transmission may be separately performed in the at least two protocol stacks by using different transmission channels, to reduce occupation of transmission resources.

With reference to the first aspect, in a possible design, the indication information is added to the data packets based on the at least two protocol stacks by using a data transmission and adaptation layer of the first node, and the data transmission and adaptation layer is located at a lower layer of the at least two protocol stacks at the service layer of the first node; or the indication information is added to the data packets based on the at least two protocol stacks by using a first logical entity in the first node, where the first logical entity is located at a lower layer of the at least two protocol stacks and an upper layer of the data transmission and adaptation layer at the service layer of the first node.

According to the foregoing method, the data transmission and adaptation layer located at the service layer of the first node may identify a protocol stack from which a data packet transferred by an upper layer comes, and add the indication information used to indicate the association relationship between the data packet and the protocol stack to the data packet, so that the peer node can identify the association relationship between the data packet and the protocol stack, and submit the data packet to a corresponding protocol stack of the upper layer. Alternatively, to reduce changes to an existing protocol as much as possible, in this embodiment of this application, the first logical entity may be added to the lower layer of the at least two protocol stacks and the upper layer of the data transmission and adaptation layer at the service layer of the first node. The first logical entity may identify a protocol stack from which a data packet comes, and add corresponding indication information to the data packet. A manner of adding the indication information and a corresponding frame structure of a data packet are not limited in this embodiment of this application. It should be noted that the peer node parses the data packet in a same manner, for example, by using the data transmission and adaptation layer or a newly added second logical entity (that corresponds to the first logical entity and may be used to parse data from the first logical entity), to learn, by using indication information obtained through parsing, an upper-layer protocol stack to which the data packet needs to be submitted. Details are not described herein.

With reference to the first aspect, in a possible design, the first node supports a first communication technology, the second node supports the first communication technology and a second communication technology, the first communication technology is different from the second communication technology, and the method further includes: sending, by the first node by using the second node, an authentication request to a network that uses the second communication technology; and receiving, by the first node by using the second node, authentication success indication information from the network that uses the second communication technology, where the target transmission requirement may include the authentication success indication information.

According to the foregoing method, in a scenario in which the first node performs network converged communication with the second communication technology by using the second node, the target transmission requirement of the first node may further include authentication success indication information from the network that uses the second communication technology, so that the first transmission channel established between the first node and the second node can meet a transmission requirement in the converged communication scenario.

With reference to the first aspect, in a possible design, the method further includes: determining to release or deactivate the first transmission channel; and sending a fifth request message to the second node, where the fifth request message is used to indicate to release or deactivate the first transmission channel.

According to the foregoing method, the first node may further dynamically release or deactivate the first transmission channel, to reduce occupation of transmission resources.

According to a second aspect, an embodiment of this application provides a communication method. The method is applied to a second node, and includes: receiving a first request message from a first node, where the first request message is used to request to establish a first transmission channel, the first transmission channel is used to communicate with the second node, and the first transmission channel is associated with a target transmission requirement of the first node; and sending a first response message to the first node, where the first response message is used to confirm establishment of the first transmission channel.

With reference to the second aspect, in a possible design, the target transmission requirement includes one or more pieces of the following information: a quality of service QoS parameter, a transmission channel parameter, user class information, control plane load information, user plane load information, control offloading information, a service type of a first service, or service feature information of the first service.

With reference to the second aspect, in a possible design, the first request message includes at least one piece of the following configuration information: address information of the first transmission channel, a source channel identifier of the first transmission channel, a source channel identifier of a first bearer associated with the first transmission channel, and an identifier of the QoS parameter.

With reference to the second aspect, in a possible design, the first response message includes at least one piece of the following confirmation information: the address information of the first transmission channel, a target channel identifier of the first transmission channel, and a target channel identifier of the first bearer associated with the first transmission channel.

With reference to the second aspect, in a possible design, a communication protocol architecture of the first node includes an access layer, a communication protocol architecture of the second node includes an access layer, and the method further includes: receiving, by the access layer of the second node, a fourth request message from the access layer of the first node, where the fourth request message is used to request to configure a first bearer associated with the first transmission channel; and sending, by the access layer of the second node, a fourth response message to the access layer of the first node, where the fourth response message is used to confirm configuration of the first bearer.

With reference to the second aspect, in a possible design, a communication protocol architecture of the first node includes an access layer, a communication protocol architecture of the second node includes an access layer, and the method further includes: sending, by the access layer of the second node, a reconfiguration message to the access layer of the first node, where the reconfiguration message is used to indicate to configure the first bearer associated with the first transmission channel.

With reference to the second aspect, in a possible design, the communication protocol architecture of the first node includes a service layer, and the communication protocol architecture of the second node includes a service layer; the receiving a first request message from a first node includes: receiving, by the service layer of the second node, the first request message from the service layer of the first node; and the sending a first response message to the first node includes: sending, by the service layer of the second node, the first response message to the service layer of the first node.

With reference to the second aspect, in a possible design, the first node supports a first communication technology, the second node supports the first communication technology and a second communication technology, the first communication technology is different from the second communication technology, and the method further includes: sending the authentication request from the first node to a network that uses the second communication technology; and sending, to the first node, authentication success indication information from the network that uses the second communication technology, where the target transmission requirement includes the authentication success indication information.

With reference to the second aspect, in a possible design, the method further includes: receiving a fifth request message from the first node, where the fifth request message is used to indicate to release or deactivate the first transmission channel.

According to a third aspect, an embodiment of this application provides a communication apparatus. The communication apparatus includes: a processing unit, configured to: determine a target transmission requirement of the first node; and determine, based on the target transmission requirement, whether to establish a first transmission channel, where the first transmission channel is used to communicate with a second node; and a communication unit, configured to: send a first request message to the second node, where the first request message is used to request to establish the first transmission channel; and receive a first response message from the second node, where the first response message is used to confirm establishment of the first transmission channel.

With reference to the third aspect, in a possible design, the target transmission requirement includes one or more pieces of the following information: a quality of service QoS parameter, a transmission channel parameter, user class information, control plane load information, user plane load information, control offloading information, a service type of a first service, or service feature information of the first service.

With reference to the third aspect, in a possible design, the first request message includes at least one piece of the following configuration information: address information of the first transmission channel, a source channel identifier of the first transmission channel, a source channel identifier of a first bearer associated with the first transmission channel, and an identifier of the QoS parameter.

With reference to the third aspect, in a possible design, the first response message includes at least one piece of the following confirmation information: the address information of the first transmission channel, a target channel identifier of the first transmission channel, and a target channel identifier of the first bearer associated with the first transmission channel.

With reference to the third aspect, in a possible design, a communication protocol architecture of the first node includes an application layer, a service layer, and an access layer

With reference to the third aspect, in a possible design, the processing unit is configured to: determine, by using the service layer based on the target transmission requirement, to establish the first transmission channel; or determine, by using the service layer based on a second request message from the application layer, to establish the first transmission channel, where the second request message is used to indicate the target transmission requirement.

With reference to the third aspect, in a possible design, the communication unit is further configured to: send, by using the service layer, a third request message to the access layer, where the third request message is used to request to configure the first bearer associated with the first transmission channel; and receive, by using the service layer, a third response message from the access layer, where the third response message is used to confirm configuration of the first bearer.

With reference to the third aspect, in a possible design, the communication unit is further configured to: receive, by using the access layer, the third request message from the service layer; and the processing unit is further configured to: determine, by using the access layer, the first bearer from a preconfigured or predefined bearer of the first node and the second node.

With reference to the third aspect, in a possible design, a communication protocol architecture of the second node includes an access layer, and the communication unit is further configured to: receive, by using the access layer of the first node, the third request message from the service layer of the first node; send, by using the access layer of the first node, a fourth request message to the access layer of the second node based on the third request message, where the fourth request message is used to request to configure the first bearer; receive, by using the access layer of the first node, a fourth response message from the access layer of the second node, where the fourth response message is used to confirm configuration of the first bearer; and send, by using the access layer of the first node, the third response message to the service layer of the first node based on the fourth response message.

With reference to the third aspect, in a possible design, a communication protocol architecture of the second node includes an access layer, and the communication unit is further configured to: receive, by using the access layer of the first node, the third request message from the service layer of the first node; receive, by using the access layer of the first node, a reconfiguration message from the access layer of the second node, where the reconfiguration message is used to indicate to configure the first bearer; and send, by using the access layer of the first node, the third response message to the service layer of the first node based on the reconfiguration message.

With reference to the third aspect, in a possible design, a communication protocol architecture of the second node includes a service layer, and the communication unit is configured to: send, by using the service layer of the first node, the first request message to the service layer of the second node; and receive, by using the service layer of the first node, the first response message from the second node.

With reference to the third aspect, in a possible design, the processing unit is further configured to: establish, by using the service layer of the first node, at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type. Optionally, the processing unit is further configured to: synchronize the at least one mapping relationship between the service layer of the first node and the access layer and/or the application layer of the first node.

With reference to the third aspect, in a possible design, the service layer of the first node supports at least two protocol stacks, and the first transmission channel is reused by data packets based on the at least two protocol stacks, where the data packets of the at least two protocol stacks include indication information, and the indication information indicates an association relationship between a data packet and a protocol stack; or the first bearer is associated with a second transmission channel that is configured by default, and data packets based on the at least two protocol stacks are separately transmitted to the second node through the first transmission channel and the second transmission channel.

With reference to the third aspect, in a possible design, the indication information is added to the data packets based on the at least two protocol stacks by using a data transmission and adaptation layer of the first node, and the data transmission and adaptation layer is located at a lower layer of the at least two protocol stacks at the service layer of the first node; or the indication information is added to the data packets based on the at least two protocol stacks by using a first logical entity in the first node, where the first logical entity is located at a lower layer of the at least two protocol stacks and an upper layer of the data transmission and adaptation layer at the service layer of the first node.

With reference to the third aspect, in a possible design, the first node supports a first communication technology, the second node supports the first communication technology and a second communication technology, the first communication technology is different from the second communication technology, and the communication unit is further configured to: send, by using the second node, an authentication request to a network that uses the second communication technology; and receive, by using the second node, authentication success indication information from the network that uses the second communication technology, where the target transmission requirement includes the authentication success indication information.

With reference to the third aspect, in a possible design, the processing unit is further configured to: determine to release or deactivate the first transmission channel; and the communication unit is further configured to: send a fifth request message to the second node, where the fifth request message is used to indicate to release or deactivate the first transmission channel.

According to a fourth aspect, an embodiment of this application provides a communication apparatus. The communication apparatus includes: a communication unit, configured to: receive a first request message from a first node, where the first request message is used to request to establish a first transmission channel, the first transmission channel is used to communicate with the second node, and the first transmission channel is associated with a target transmission requirement of the first node; and send a first response message to the first node, where the first response message is used to confirm establishment of the first transmission channel.

With reference to the fourth aspect, in a possible design, the target transmission requirement includes one or more pieces of the following information: a quality of service QoS parameter, a transmission channel parameter, user class information, control plane load information, user plane load information, control offloading information, a service type of a first service, or service feature information of the first service.

With reference to the fourth aspect, in a possible design, the first request message includes at least one piece of the following configuration information: address information of the first transmission channel, a source channel identifier of the first transmission channel, a source channel identifier of a first bearer associated with the first transmission channel, and an identifier of the QoS parameter.

With reference to the fourth aspect, in a possible design, the first response message includes at least one piece of the following confirmation information: the address information of the first transmission channel, a target channel identifier of the first transmission channel, and a target channel identifier of the first bearer associated with the first transmission channel.

With reference to the fourth aspect, in a possible design, a communication protocol architecture of the first node includes an access layer, a communication protocol architecture of the second node includes an access layer, and the communication unit is further configured to: receive, by using the access layer of the second node, a fourth request message from the access layer of the first node, where the fourth request message is used to request to configure a first bearer associated with the first transmission channel; and send, by using the access layer of the second node, a fourth response message to the access layer of the first node, where the fourth response message is used to confirm configuration of the first bearer.

With reference to the fourth aspect, in a possible design, a communication protocol architecture of the first node includes an access layer, a communication protocol architecture of the second node includes an access layer, and the communication unit is further configured to: send, by using the access layer of the second node, a reconfiguration message to the access layer of the first node, where the reconfiguration message is used to indicate to configure the first bearer associated with the first transmission channel.

With reference to the fourth aspect, in a possible design, the communication protocol architecture of the first node includes a service layer, and the communication protocol architecture of the second node includes a service layer. The communication unit is configured to: receive, by using the service layer of the second node, the first request message from the service layer of the first node; and send, by using the service layer of the second node, the first response message to the service layer of the first node.

With reference to the fourth aspect, in a possible design, the first node supports a first communication technology, the second node supports the first communication technology and a second communication technology, the first communication technology is different from the second communication technology, and the communication unit is further configured to: send the authentication request from the first node to a network that uses the second communication technology; and send, to the first node, authentication success indication information from the network that uses the second communication technology, where the target transmission requirement includes the authentication success indication information.

With reference to the fourth aspect, in a possible design, the communication unit is further configured to: receive a fifth request message from the first node, where the fifth request message is used to indicate to release or deactivate the first transmission channel.

According to a fifth aspect, an embodiment of this application provides a communication apparatus, including at least one processor and an interface circuit. The interface circuit is configured to provide data or a code instruction for the at least one processor. The at least one processor is configured to implement the method according to any one of the first aspect and the possible designs of the first aspect by using a logic circuit or executing the code instruction, or implement the method according to any one of the second aspect and the possible designs of the second aspect.

According to a sixth aspect, an embodiment of this application provides a communication system, including a communication apparatus configured to implement the method according to any one of the first aspect and the possible designs of the first aspect, and a communication apparatus configured to implement the method according to any one of the second aspect and the possible designs of the second aspect.

According to a seventh aspect, an embodiment of this application provides a computer-readable storage medium. The computer-readable storage medium stores program code. When the program code runs on a computer, the computer is enabled to perform the method according to the first aspect and the possible designs of the first aspect, or when the program code runs on a computer, the computer performs the method according to the second aspect and the possible designs of the second aspect.

According to an eighth aspect, an embodiment of this application provides a computer program product. When the computer program product runs on a computer, the computer is enabled to perform the method according to the first aspect and the possible designs of the first aspect, or perform the method according to the second aspect and the possible designs of the second aspect.

According to a ninth aspect, an embodiment of this application provides a chip system. The chip system includes a processor, configured to invoke a computer program or computer instructions stored in a memory, so that the processor performs the method according to the first aspect and the possible designs of the first aspect, or performs the method according to the second aspect and the possible designs of the second aspect.

With reference to the ninth aspect, in a possible implementation, the processor may be coupled to the memory by using an interface.

With reference to the ninth aspect, in a possible implementation, the chip system may further include the memory, and the memory stores a computer program or computer instructions.

According to a tenth aspect, an embodiment of this application provides a processor. The processor is configured to invoke a computer program or computer instructions stored in a memory, so that the processor performs the method according to the first aspect and the possible designs of the first aspect, or performs the method according to the second aspect and the possible designs of the second aspect.

In embodiments of this application, based on the implementations according to the foregoing aspects, further combination may be performed to provide more implementations.

For technical effect that can be achieved by any possible design in any one of the second aspect to the tenth aspect, correspondingly refer to descriptions of technical effect that can be achieved by any possible design in any one of the first aspect. No repeated description is provided.

### BRIEF DESCRIPTION OF DRAWINGS

FIG. 1 is a schematic diagram of a communication protocol architecture according to an embodiment of this application;
FIG. 2 is a schematic diagram of a communication system to which an embodiment of this application is applicable;
FIG. 3 is a schematic diagram of another communication system to which an embodiment of this application is applicable;
FIG. 4 is a schematic flowchart of a communication method according to an embodiment of this application;
FIG. 5a, FIG. 5b-1, and FIG. 5b-2 are schematic diagrams of a communication method according to an embodiment of this application;
FIG. 6a, FIG. 6b-1, and FIG. 6b-2 are schematic diagrams of a communication method according to an embodiment of this application;
FIG. 7a and FIG. 7b are schematic diagrams of a converged communication scenario to which an embodiment of this application is applicable;
FIG. 8a to FIG. 8c are schematic diagrams of a converged communication scenario to which an embodiment of this application is applicable;
FIG. 9 is a schematic diagram of a communication apparatus according to an embodiment of this application; and
FIG. 10 is a schematic diagram of a communication apparatus according to an embodiment of this application.

### DESCRIPTION OF EMBODIMENTS

The following describes some terms in embodiments of this application, to facilitate understanding of a person skilled in the art.

### (1) Communication apparatus

A communication apparatus (or referred to as a communication node) is an apparatus that provides data connectivity for a user, or may be referred to as a communication device.

For example, the communication apparatus may be a terminal device, including a device that provides voice and/or data connectivity for the user. Specifically, the terminal device may include a device that provides voice for the user, or include a device that provides data connectivity for the user, or include a device that provides voice and data connectivity for the user. For another example, the terminal device may include a handheld device having a wireless connection function or a processing device connected to a wireless modem. For example, the terminal device may communicate with a core network through a radio access network (radio access network, RAN), and exchange a voice and/or data with the RAN. The terminal device may be a vehicle, user equipment (user equipment, UE), a wireless terminal device, a mobile terminal device, a device-to-device (device-to-device, D2D) terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a mobile console (mobile), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a dedicated terminal device in a narrowband internet of things (narrow band internet of things, NB-IoT), or a portable, pocket-sized, handheld, computer built-in, or vehicle-mounted mobile apparatus. For example, the terminal device may be a device such as a personal communication service (personal communication service, PCS) phone, a cordless telephone set, a session initiation protocol (SIP) phone, a wireless local loop (Wireless Local Loop, WLL) station, or a personal digital assistant (Personal Digital Assistant, PDA). The terminal device further includes a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

Optionally, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is worn directly on the body or integrated onto clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

Optionally, the terminal device may further include a relay (relay). Alternatively, it may be understood that all devices that can perform data communication with a base station may be considered as terminal devices.

In this embodiment of this application, the communication apparatus may include but is not limited to an intelligent terminal such as a smartphone, a notebook computer, or a tablet computer that has a short-range communication function, a mouse, a keyboard, a headset, a sound system, or a vehicle-mounted playing device. When there are at least two communication apparatuses, for ease of distinguishing, the at least two communication apparatuses may be respectively referred to as a first communication apparatus, a second communication apparatus, and the like, and correspondingly, may also be simply referred to as a first apparatus and a second apparatus, a first node and a second node, or the like.

A communication connection may be implemented between the first node and the second node by using a first communication technology, for example, a specific short-range communication technology. The short-range communication technology may include but is not limited to a Bluetooth (Bluetooth) technology, a wireless fidelity (wireless fidelity, Wi-Fi) technology, a near field communication (near field communication, NFC) technology, a Wi-Fi Aware technology, a universal short-range communication technology, and the like. Short-range communication is widely used in file transfer, remote control, screen projection, and perception of surrounding devices. The following lists examples of several short-range communication technologies.

Bluetooth is a radio technology that supports short-range communication between devices, and can be used to exchange wireless information between a plurality of devices such as mobile phones, wireless headsets, notebook computers, and related peripherals. Through the "Bluetooth" technology, communication between mobile communication terminal devices can be effectively simplified, and communication between a device and the Internet can also be successfully simplified, so that data transmission becomes faster and more efficient, and a road is broadened for wireless communication.

A wireless fidelity (wireless fidelity, Wi-Fi) technology is also referred to as wireless local area network (wireless local area network, WLAN) direct connection or Wi-Fi direct, and is one of the Wi-Fi protocol stacks and enables devices to easily connect to each other without using intermediate wireless access points. Usage of Wi-Fi ranges from web browsing to file transfer. Wi-Fi communicates with a plurality of devices at the same time, and can make use of a speed advantage of Wi-Fi. Devices that comply with this standard can be easily interconnected even if the devices are from different manufacturers.

A Wi-Fi Aware technology is responsible for sensing and discovery in the Wi-Fi technology, and can help a Wi-Fi device sense a surrounding service, for example, a surrounding device, so as to implement peer to peer (Peer to Peer, P2P) message exchange between two devices at a short distance by using the Wi-Fi Aware. Because the Wi-Fi Aware can sense a surrounding device, a plurality of functions may be implemented, for example, sensing a nearby person and establishing a connection, adding a friend, or playing a same game; or discovering a surrounding device and implementing photo sharing or location sharing; or securely sending a file to a printer without accessing a network (such as a cellular or wireless network).

It should be noted that, in addition to the foregoing three short-range communication technologies, another existing short-range communication technology, or another short-range communication technology that may appear in the future with evolution of a communication technology may also be applicable to this solution.

It may be understood that, in this application, the at least two communication apparatuses may be alternatively classified into two types of nodes in a logical function, namely, a master node (or referred to as a grant node) and a slave node. The master node may manage the slave node, has a resource allocation capability or a resource scheduling capability, and may allocate a resource to the slave node or configure a related function of the slave node. The slave node can follow the allocation or scheduling of the master node, and perform communication based on the resource allocated by the master node. It should be noted that attributes and features of the master node and the slave node may change. For example, when an intelligent terminal communicates with a mouse, the intelligent terminal is a master node, and the mouse is a slave node. However, when the intelligent terminal accesses another device with a higher priority and follows scheduling of the another device, a role attribute of the intelligent terminal changes to a slave node. In this embodiment of this application, a G node may be used to represent the grant node, and a T node may be used to represent the slave node.

It should be understood that, in this application, the communication apparatus may be alternatively a network device, for example, includes an access network (access network, AN) device such as a base station (for example, an access point), and may be a device that communicates with a wireless terminal device by using an air interface in an access network, or may be, for example, a network device in a vehicle-to-everything (vehicle-to-everything, V2X) technology, to be specific, a roadside unit (road side unit, RSU). The base station may be configured to perform mutual conversion between a received over-the-air frame and an IP packet, and serve as a router between the terminal device and a remaining part of the access network. The remaining part of the access network may include an IP network. The RSU may be a fixed infrastructure entity that supports a V2X application, and may exchange messages with another entity that supports the V2X application. The network device may also coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a fifth generation (the 5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in this embodiment of this application.

The network device may further include a core network device. For example, the core network device includes an access and mobility management function (access and mobility management function, AMF), a session management function (session management function, SMF), or a user plane function (user plane function, UPF) in a 5G system, or includes a mobility management entity (mobility management entity, MME) in a 4G system.

### (2) Communication protocol architecture

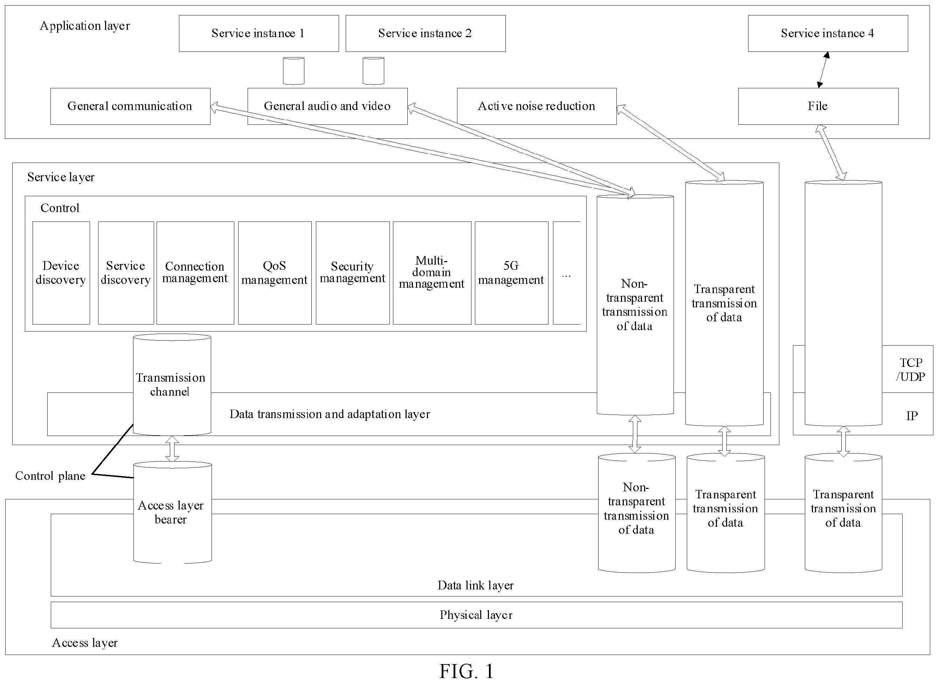

A short-range communication technology is used as an example. As shown in FIG. 1, a communication protocol architecture of the short-range communication technology may include an application layer (application layer), a service layer (service layer), and an access layer (access layer), and each layer may be referred to as a protocol layer.

It should be understood that the layers herein are merely framework-based structural division, and are generally divided into three large layers: an upper layer, a middle layer, and a bottom layer. Different communication systems may have respective layer division manners, or may have more specific and lower layer division. This is not specifically limited herein. For example, in the conventional technology, there are a plurality of possible network models, for example, including seven layers, five layers, and three layers. A function of each layer may be implemented by using one or more protocols. For example, protocols for the service layer may include IPv4, and protocols for the access layer may include a logical link control and adaptation protocol (logical link control& adaption protocol, L2CAP) layer and/or a link (link, LL) layer

The application layer is located above the service layer. Several applications (application)/service instances may be deployed, and may be used to provide services for an application (also referred to as an application or a user), for example, a general communication service, a general audio and video service, an active noise reduction service, and a file service. Optionally, the application layer may be further configured to provide session support and/or information support for the user.

The service layer is located above the access layer, and is configured to establish a connection between a source node (for example, the first node) and a destination node (for example, the second node), and provide an end-to-end information transmission service. Optionally, the service layer may correspond to a network layer (network layer) or a data transmission and adaptation layer. The network layer may be responsible for performing transmission control and route selection, and determining a transmission bearer (or referred to as a transmission channel) for different functions (for example, device discovery, service discovery, connection management, QoS management, security management, multi-domain management, measurement management, and 5G convergence). Optionally, the network layer may further perform traffic control. The data transmission and adaptation layer may be configured to encode or decode data (including transparently transmitted data and non-transparently transmitted data) transmitted by the upper layer, so as to convert the data into a compatible or suitable transmission format.

The access layer may provide a communication interface/means for communication between nodes. The access layer may include a plurality of different access technologies, and the different access technologies may correspond to different communication interfaces, for example, a cellular interface and a Wi-Fi interface. Optionally, the access layer corresponds to a data link layer and a physical layer.

The data link layer ensures reliable data transmission on a physical link. Data or an instruction is encapsulated into a specific frame that can be transmitted at the physical layer. Optionally, the data link layer further includes functions such as access control, resource management, data segmentation, concatenation, and error correction. For example, the Bluetooth protocol is used as an example, and the data link layer may include a logical link control and adaptation protocol (logical link control and adaptation protocol, L2CAP) layer and a logical layer (logical layer, LL). The L2CAP is responsible for functions such as data encapsulation, segmentation, and logical channel management. The LL layer is responsible for resource management and allocation. The data link layer may include one or more access layer bearers (or referred to as link channels or logical channels), and is used to transmit data or an instruction from the upper layer (for example, the service layer).

The physical layer provides a physical connection for the data link layer by using a transmission medium and transparently transmits a bit stream. Generally, channel encoding or decoding is performed at the physical layer to ensure data transmission reliability.

Because the service layer may have different networks and/or transport protocols, the data link layer may be further configured to provide a transmission adaptation function with different networks and/or transport protocols. For example, a data packet from the bottom layer (a protocol layer below the data link layer) is received, an upper-layer (a protocol layer above the data link layer) protocol type to which the data packet belongs is distinguished, and the data packet is submitted (or referred to as transferred) to a corresponding upper-layer protocol for processing. It should be noted that the data link layer is a logical function layer, and in implementation, the data link layer may also be included in the service layer. This is not limited in this application.

It should be understood that an upper layer of a protocol layer in this application is any protocol layer above the protocol layer, for example, an upper layer of the L2CAP layer, and may be the service layer or the application layer. A process in which an upper layer transmits a data packet to a lower layer may be referred to as transfer. A process in which a lower layer transmits a data packet to an upper layer may be referred to as submission.

At each protocol layer, a corresponding data packet header (or referred to as a frame header) needs to be added to a data packet transferred by the upper layer, so that a peer layer of a peer node parses the data packet. For example, an LL layer of a transmit end node adds an LL layer header to the data packet, and the LL header needs to be parsed at an LL layer of a receive end node.

In this embodiment of this application, for a data packet transferred by the upper layer, before a header is added, the data packet may be referred to as a service data unit (service data unit, SDU), and after a header is added, the data packet is referred to as a protocol data unit (protocol data unit, PDU). For example, a data packet that is transferred by the L2CAP layer and that is received by the LL layer may be referred to as an LL SDU (also referred to as an L2CAP PDU). After the LL adds a header to the data packet, the data packet to which the header is added is referred to as an LL PDU. In contrast, at a receive end, the LL may remove a header from a received LL PDU (also referred to as a PHY SDU) to obtain an LL SDU, and submit the LL SDU to the upper layer.

It may be understood that, at a transmit end, if the any protocol layer transparently transmits data, a PDU generated by the protocol layer includes only an SDU. For a data transmit end, transparent transmission means that the protocol layer does not perform header encapsulation processing on a current-layer SDU (also referred to as an upper-layer PDU) from the upper layer, and directly transfers the current-layer SDU to the lower layer as a current-layer PDU. Transparent transmission may also be referred to as transparent transmission or pass-through. It may be understood that transparent transmission means that service data content is not changed during communication, for example, actions such as segmentation, concatenation, splicing, reordering, and header addition are not performed on the data, and original content is transmitted from a source address to a destination address. At a data receive end, transparent transmission indicates that the protocol layer does not decapsulate a lower-layer SDU (also referred to as a current-layer PDU) submitted by the lower layer, and directly submits the current-layer PDU as the current-layer SDU to the upper layer.

In an optional design, during transparent transmission, a transmit end protocol layer (for example, an LL layer) may encrypt transmitted data, and a receive end protocol layer (for example, an LL layer) may decrypt the data. Algorithms, parameters, and the like used for encryption and decryption may be agreed upon by both the transmit end node and the receive end node in advance or defined in a protocol.

In an optional design, during transparent transmission, a transmit end protocol layer may add a cyclic redundancy check (cyclic redundancy check, CRC) check code to transmitted data, so that the receive end protocol layer checks the data. Algorithms and the parameters used in a CRC check operation may be agreed upon by both the G node and the T node in advance or defined in a protocol. The CRC check code may be added to a tail of the transmitted data.

### (3) Protocol and protocol stack

In this embodiment of this application, each protocol layer may support one or more protocols, and one protocol at each protocol layer is corresponding to one protocol stack.

The protocol is different from the protocol stack. A protocol is a group of agreements that an execution body needs to comply with. A protocol stack is a unit or module that processes data by using a protocol. Data generated by the protocol stack is sent after being processed by the lower layer (for example, the access layer). In this embodiment of this application, the protocol stack may also be simply understood as a unit or module that is in the G node or the T node and that can process data by using a protocol.

The T node is used as an example. It is assumed that a first protocol stack supports a first protocol, to be specific, the first protocol stack is a unit or module that is in the T node and that processes data by using the first protocol. Similarly, it is assumed that a second protocol stack supports a second protocol, to be specific, the second protocol stack may be a unit or module that is in the T node and that processes data by using the second protocol. The first protocol stack and the second protocol stack may be a same unit or different units. This is not limited in this embodiment of this application.

It should be understood that in different protocol stacks, protocol layers such as an application layer, a service layer, and an access layer may be further divided into different protocol layers, and corresponding protocol layers used to implement a same or similar function may also have different names. This is not limited in this application. A protocol in this embodiment of this application is not limited to a protocol used for communication.

### (4) Logical channel

Generally, different services usually have different quality of service (Quality of Service, QoS) requirements. Therefore, different logical channels may be established for different services, to ensure differentiated QoS requirements of different services. For example, different logical channels are separately established for an audio service and a video service.

An example in which a single logical channel corresponds to only one service is used. For example, a logical channel 1 corresponds to a service ①, and a logical channel 2 corresponds to a service ②. Data of the service ① cannot reuse the logical channel 2, and data of the service ② cannot reuse the logical channel 1. Generally, different logical channels correspond to different transmission resources. For example, the logical channel 1 corresponds to a transmission resource 1, the logical channel 2 corresponds to a transmission resource 2, and the transmission resource 1 and the transmission resource 2 are different. For example, time domain resources of the transmission resource 1 and the transmission resource 2 are different (for example, if a short-range communication system is a time division system, the transmission resource 1 and the transmission resource 2 are time-division).

Certainly, it may be understood that a same logical channel may also be established for one or more services with similar QoS requirements, to reduce a quantity of logical channels and facilitate management.

In a broader sense, a logical channel is a plurality of virtual channels that are divided according to different transmission content of a physical channel. In other words, the physical channel completes transmission work, and the logical channel is used to define the transmission content. For example, logical channels may be classified into two types: a control channel and a traffic channel. The control channel is used to transmit control plane information, and the traffic channel is used to transmit user plane information (for example, service data).

In this embodiment of this application, an access layer bearer may be a logical channel, and has a logical channel identifier (Logical Channel Identifier, LCID).

(5) At least one means one or more (including a plurality of, which means two or more), in other words, includes one, two, three, or more.

(6) Carrying may mean that a message is used to bear information or data, or may mean that the message includes which information, or which information is included in the message.

(7) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In addition, it should be understood that, in descriptions of this application, terms such as "first" and "second" are merely used for distinguishing and description, but should not be understood as indicating or implying relative importance, or should not be understood as indicating or implying a sequence.

The following describes a communication system to which an embodiment of this application is applicable.

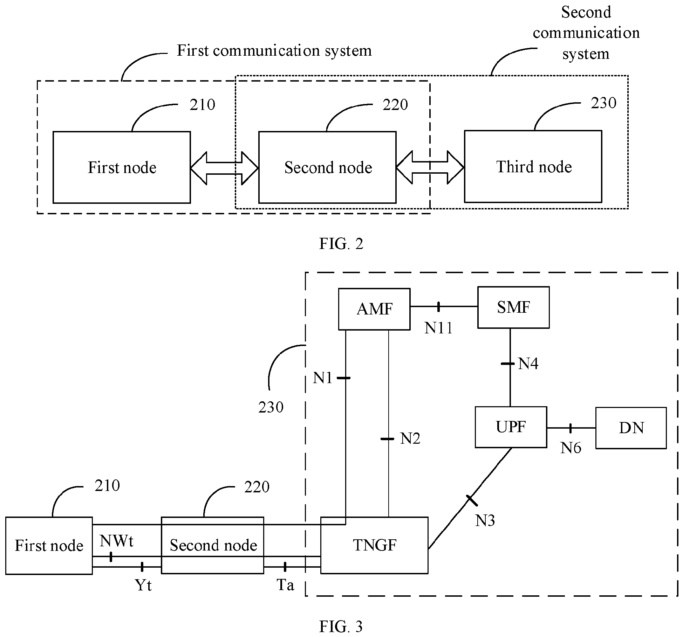

FIG. 2 is a schematic diagram of a communication system to which an embodiment of this application is applicable. As shown in FIG. 2, the communication system may include a first node 210 and a second node 220. The first node 210 may be a terminal node, the second node 220 may be a grant node of the first node 210, and both the first node 210 and the second node 220 may support a first communication technology. The first node 210 and the second node 220 may form a first communication system, and may communicate with each other by using the first communication technology.

In an optional design, the communication system may further include a third node 230. Both the second node 220 and the third node 230 may support a second communication technology. The second node 220 and the third node 230 may form a second communication system, and may communicate with each other by using the second communication technology. The first communication technology is different from the second communication technology. In a converged communication scenario of the first communication technology and the second communication technology, a communication connection may be established between the first communication system and the second communication system, to form a heterogeneous communication system. The first node 210, the second node 220, and the third node 230 may perform a corresponding communication service and/or transmit communication service data in the heterogeneous communication system.

As shown in FIG. 3, an example in which the first communication technology is a short-range communication technology and the second communication technology is a 5G communication technology is used. The third node 230 may include but is not limited to at least one of an access network device such as a trusted non-3rd Generation Partnership Project (3rd Generation Partnership Project, 3GPP) gateway function (Trusted Non-3GPP Gateway Function, TNGF) and a core network device, for example, a functional entity such as an SMF, an AMF, a UPF, and a data network (Data Network, DN).

Nodes or functional entities may be connected by using interfaces. A sequence number of an interface or a name of an interface is not limited in this embodiment of this application. An interface defined in a 3GPP-related standard protocol of a 5G system may be used, or an interface in a future communication system may be used. For example, the second node 220 may communicate with the first node 210 by using a Yt interface, the first node 210 may communicate with the TNGF by using a Ta interface, and the second node 220 may communicate with the TNGF by using an NWt interface. The second node 220 and the first node 210 may communicate with the AMF by using a next generation (next generation, N) 1 interface (N1 for short), a network device (for example, a TNGF) communicates with the AMF by using an N2 interface (N2 for short), the TNGF communicates with a local UPF by using an N3 interface (N3 for short), and the UPF communicates with a DN by using an N6 interface (N6 for short). The AMF communicates with the SMF by using an N11 interface (N11 for short), and the SMF communicates with the UPF by using an N4 interface (N4 for short). In this way, a 5G network can sense key information such as a device status, a network status, and a service status of the second node 220 by using the first node 210, so that an industry field network and a service can be remotely reachable, sensed, managed, and the like.

It should be noted that, the foregoing is merely an example to indicate that the heterogeneous communication system may include the first node 210, the second node 220, and the third node 230, and a communication manner between nodes and function modules of the nodes, and does not limit a quantity of each node and a sequence number or a name of an interface. During specific implementation, a quantity of first nodes 210, a quantity of second nodes 220, and a quantity of third nodes 230 may not be limited to 1.

In addition, it should be noted that, in this embodiment of this application, the second node 220 may perform a radio resource control (radio resource control, RRC) establishment process with the third node 230. After the second node 220 establishes an RRC connection to the third node 230, an RRC mode of the second node 220 is an RRC connected mode. Then, the RRC mode of the second node 220 may switch between the following modes: an RRC idle (RRC_IDLE) mode, the RRC connected (RRC_CONNECTED) mode, and an RRC inactive (RRC_INACTIVE) mode. In a converged communication scenario in this embodiment of this application, the second node 220 may be in any one of the foregoing idle mode, connected mode, and inactive mode. This is not limited in this embodiment of this application.

The communication systems shown in FIG. 2 and FIG. 3 may be configured to implement communication methods in embodiments of this application. The following describes the communication methods in embodiments of this application with reference to the accompanying drawings and embodiments.

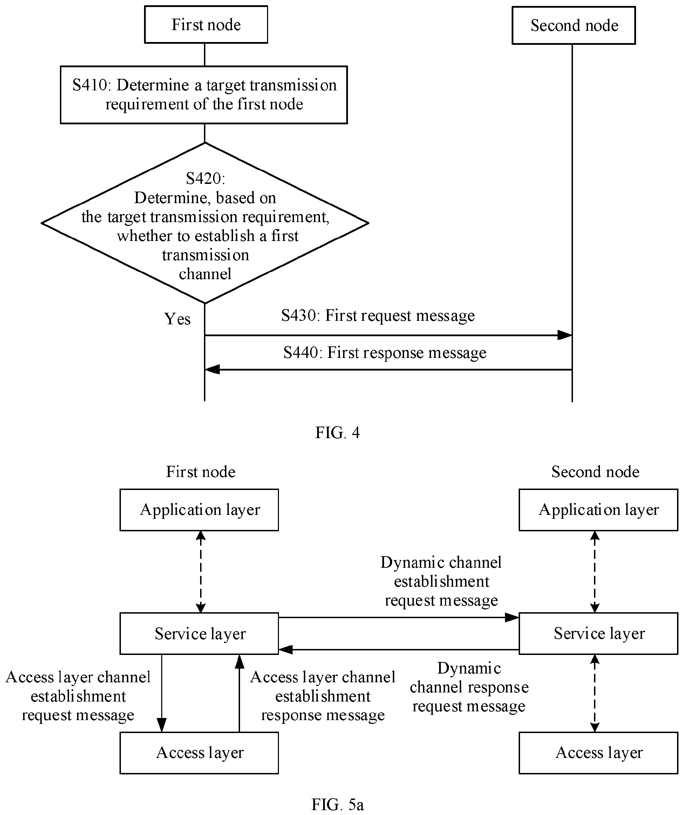

FIG. 4 is a schematic flowchart of a communication method according to an embodiment of this application. As shown in FIG. 4, the communication method may include the following steps.

S410: A first node determines a target transmission requirement of the first node.

In this embodiment of this application, the target transmission requirement of the first node is a requirement of the first node for implementing a transmission service (including a control plane transmission service and/or a user plane transmission service). The target transmission requirement may be determined based on a related parameter of an application layer, a service layer, or an access layer of the first node, or may be determined based on a first service of the first node. This is not limited in this embodiment of this application.

For example, the target transmission requirement may include one or more pieces of the following information: an application layer quality of service (Quality of Service, QoS) parameter, including but not limited to a use rate, a use bit width, an audio/video coding parameter, and the like; a transmission channel parameter, including but not limited to a priority, a packet delay, a packet error rate, a delay jitter, and a throughput rate; user class information; control plane load information; user plane load information; control offloading information (for example, offloading to different communication nodes); a service type of the first service; or service feature information of the first service.

S420: The first node determines, based on the target transmission requirement, whether to establish a first transmission channel, where the first transmission channel is used to communicate with a second node.

In a specific implementation process, the first node may determine, based on whether the target transmission requirement meets a dynamic channel establishment condition, whether the first transmission channel needs to be established. The dynamic channel establishment condition may include but is not limited to a bandwidth condition, a guaranteed bit rate condition, a delay condition, and the like that need to be met for establishing the first transmission channel. This is not limited in this embodiment of this application. If the first transmission channel does not need to be established, the first node may directly reuse, as the first transmission channel, a transmission channel that already exists between the first node and the second node and that meets the target transmission requirement, and does not need to dynamically establish the first transmission channel. If the first transmission channel needs to be established, the first node may trigger a procedure of dynamically establishing the first transmission channel, to communicate with the second node based on the established first transmission channel. The process of establishing the dynamic transmission channel is described in detail in the following, and is not described herein.

S430: Further, the first node may send a first request message to the second node, where the first request message is used to request to establish the first transmission channel.

For example, the first request message includes at least one piece of the following configuration information: address information of the first transmission channel, a source channel identifier of the first transmission channel, a source channel identifier of a first bearer associated with the first transmission channel, and an identifier of the QoS parameter of the first transmission channel.

The address information of the first transmission channel may be used for routing. For example, the first transmission channel is established for a specific function module, and the address information may be a module identifier of the corresponding function module, so that when information is transmitted on the peer node based on the first transmission channel, a function module from which the information comes or a function module to which the information from the peer node needs to be sent may be learned.

The source channel identifier of the first transmission channel is a transmission channel identifier borne in a request message sent by a requester to a responder. The " source" indicates a transmission direction of a message that bears the channel identifier, to be specific, the message is sent by the requester (namely, a source node) to the responder (namely, a target node). The first node is not limited to a source node and the second node is not limited to a target node. In some embodiments, if roles of the first node and the second node are exchanged, to be specific, if the second node serves as a requester and the first node serves as a responder, the channel identifier carried in the first request message sent by the second node to the first node may be referred to as a "source channel identifier". Similarly, the source channel identifier of the first bearer is also a channel identifier of an access layer bearer and borne in a request message sent by a requester to a responder. The "source" indicates a transmission direction of a message that bears the channel identifier, to be specific, the message is sent by the requester to the responder. Also, the first node is not limited to a source node and the second node is not limited to a target node. In some embodiments, if roles of the first node and the second node are exchanged, to be specific, if the second node serves as a requester and the first node serves as a responder, the channel identifier carried in the first request message sent by the second node to the first node may be referred to as a "source channel identifier". Similarly, the "target" indicates a transmission direction of a message that bears the channel identifier, to be specific, the message is sent by a responder to a requester. Details are not described herein.

The QoS parameter of the first transmission channel indicates a QoS parameter of the first transmission channel that needs to be established for the first node. The identifier of the QoS parameter may be used to indicate the QoS parameter. For example, the identifier of the QoS parameter may be an XQI value corresponding to a group of QoS parameters (for example, a value of X may be 5 indicating 5G).

It should be understood that, in this embodiment of this application, the at least one piece of configuration information is merely an example of related information that the first node may configure for a to-be-established first transmission channel, and does not limit a configuration capability of the first node. In another embodiment, the first request message may further include other information configured by the first node for the first transmission channel. Details are not described herein.

S440: The first node receives a first response message from the second node, where the first response message is used to confirm establishment of the first transmission channel.

In this embodiment of this application, the first response message is a response made by the second node to the first request message. For example, the first response message may include at least one piece of the following confirmation information: the address information of the first transmission channel, a target channel identifier of the first transmission channel, and a target channel identifier of the first bearer associated with the first transmission channel.

In the first response message, the address information of the first transmission channel is the same as the address information of the first transmission channel and carried in the first request message, and it indicates that the second node agrees with the address information of the first transmission channel. In the first response message, the target channel identifier of the first transmission channel may be the same as the source channel identifier of the first transmission channel and carried in the first request message, and it indicates that the second node agrees with the transmission channel identifier configured by the first node for the first transmission channel. Alternatively, the target channel identifier of the first transmission channel may be different from the source channel identifier of the first transmission channel carried in the first request message, and it indicates that the second node does not agree with the transmission channel identifier configured by the first node for the first transmission channel, and reconfigures a third transmission channel to replace the first transmission channel for communication between the first node and the second node. The target channel identifier is a channel identifier of the third transmission channel. In an optional design, the first response message may further carry the source channel identifier (obtained from the first request message) of the first transmission channel, to notify the first node that the first transmission channel that is requested to be configured needs to be replaced with the third transmission channel. Similarly, the target channel identifier of the first bearer associated with the first transmission channel may also be the same as or different from the source channel identifier of the first bearer and carried in the first request message. Optionally, the first response message may also carry the source channel identifier of the first bearer.

Therefore, according to the foregoing method, the first node may dynamically negotiate with the second node based on the target transmission requirement of the first node, and establish the first transmission channel, without statically occupying a transmission resource. This helps improve transmission resource utilization efficiency, and can further meet various different transmission requirements, to adapt to more diversified transmission scenarios.

In a specific implementation process, specific implementation steps of the communication method in this embodiment of this application are different. For ease of understanding, the following provides detailed descriptions with reference to different cases.

Case 1: A first bearer that meets the target transmission requirement exists between an access layer of the first node and an access layer of the second node.

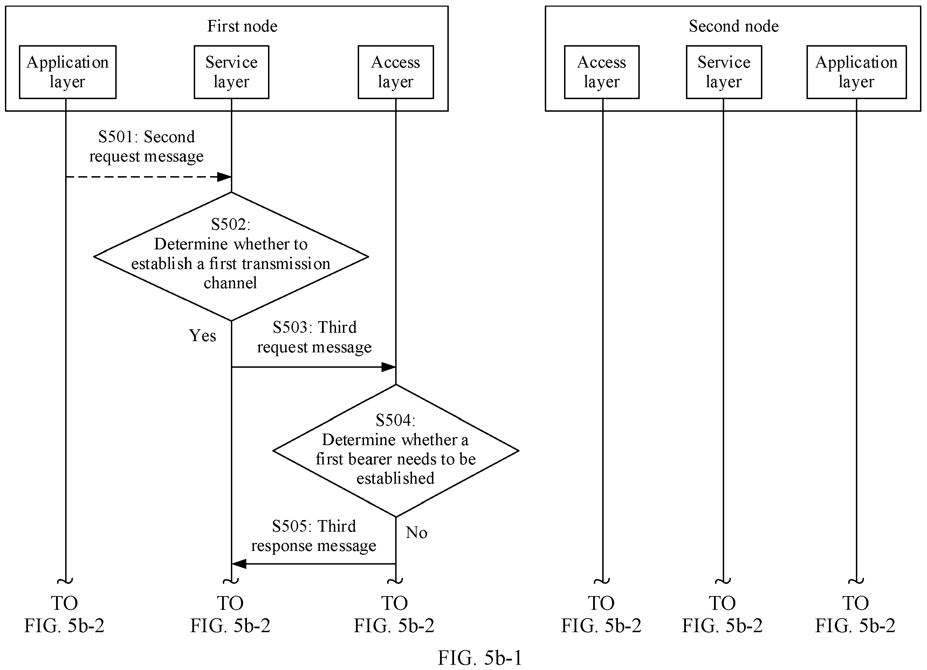

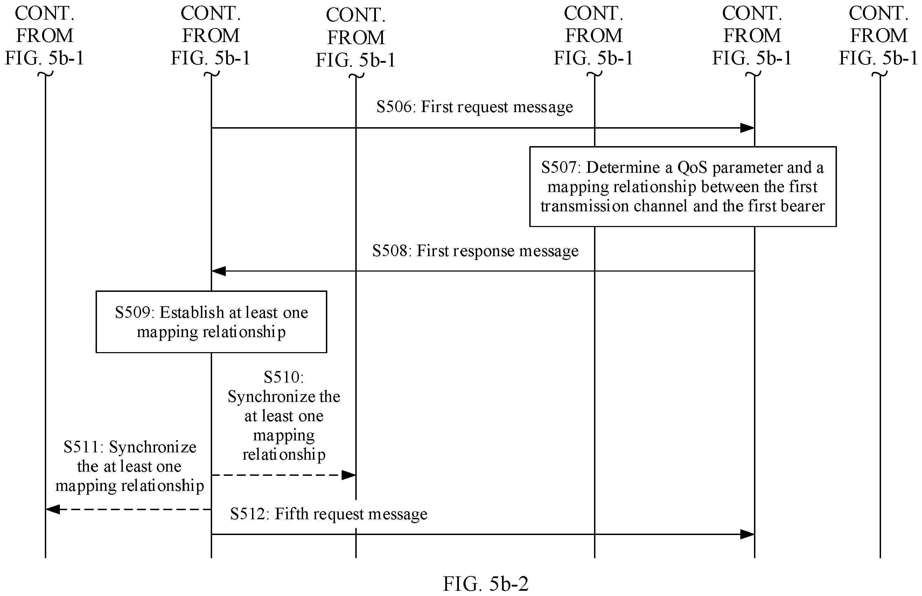

As shown in FIG. 5a, a communication protocol architecture of the first node may include an application layer, a service layer, and an access layer, and a communication protocol architecture of the second node may include an application layer, a service layer, and an access layer. The service layer of the first node may determine whether to establish a first transmission channel. When determining that the first transmission channel needs to be established, the service layer of the first node may send an access layer channel establishment request message to the access layer of the first node, where the access layer channel establishment request message may be used to request to configure a first bearer that meets the target transmission requirement.

The access layer of the first node may first determine, in response to the access layer channel establishment request message, whether the first bearer that meets the target transmission requirement exists. When the first bearer exists, the access layer of the first node may determine the first bearer from existing bearers, and feed back an access layer channel response message to the service layer of the first node, to notify the service layer of the first node of an available first bearer that meets the target transmission requirement. Further, based on the first bearer, the service layer of the first node may send a dynamic channel establishment request message to the service layer of the second node, and receive a dynamic channel establishment response message from the service layer of the second node, to negotiate with the second node and dynamically establish the first transmission channel. Optionally, the first bearer may be further associated with a second transmission channel that is configured by default, and both the second transmission channel and the dynamically established first transmission channel may be mapped to the first bearer. It should be understood that dashed arrows in FIG. 5a indicate only information exchange that can be performed between corresponding protocol layers, and do not limit information exchanged.

As shown in FIG. 5b-1 and FIG. 5b-2, the communication method may include the following steps.

In an optional design, the communication method may be triggered by the application layer of the first node. S501 (optional): The application layer of the first node may determine a target transmission requirement of the first node, and determine whether a first transmission channel needs to be established. When determining that the first transmission channel needs to be established, the application layer of the first node may send a second request message to a service layer of the first node. Correspondingly, the service layer of the first node may receive the second request message from the application layer of the first node. The second request message may be used to indicate the target transmission requirement. For example, the second request message may include an application layer QoS parameter. S502: The service layer of the first node may determine, based on the second request message from the service layer of the first node, whether to establish the first transmission channel.

In another optional design, the communication method may be triggered by the service layer of the first node. S502: The service layer of the first node may determine the target transmission requirement of the first node, and determine, based on the target transmission requirement, whether to establish the first transmission channel.

According to a result of determining in S502, when the result of determining is yes, to be specific, when it is determined to establish the first transmission channel, go to S503. When it is determined not to establish the first transmission channel, a transmission channel that already exists between the first node and the second node may be directly reused based on the target transmission requirement of the first node.

S503: The service layer of the first node sends a third request message to the access layer of the first node, where the third request message is used to request to configure a first bearer that meets the target transmission requirement. Correspondingly, the access layer of the first node receives the third request message from the service layer of the first node.

S504: The access layer of the first node determines, based on the third request message, whether the first bearer needs to be established.

For example, the access layer of the first node may determine, from a preconfigured or predefined bearer of the first node and the second node, whether the first bearer that meets the target transmission requirement exists.

If the first bearer exists, the first bearer does not need to be established. The access layer of the first node may determine the first bearer from the preconfigured or predefined bearer of the first node and the second node. Then, go to S505.

S505: The access layer of the first node sends a third response message to the service layer of the first node, where the third response message is used to confirm configuration of the first bearer. Correspondingly, the service layer of the first node receives the third response message from the access layer of the first node. For example, the third response message includes an identifier of the first bearer.

S506: The service layer of the first node sends the first request message to the service layer of the second node. Correspondingly, the service layer of the second node receives the first request message.

For example, the first request message includes at least one piece of the following configuration information: address information of the first transmission channel, a source channel identifier of the first transmission channel, a source channel identifier of a first bearer associated with the first transmission channel, and an identifier of the QoS parameter. It should be understood that, in this embodiment of this application, the source channel identifier represents only a transmission direction of data information. For example, the source channel identifier of the first transmission channel represents an identifier of a direction in which the data information is transmitted from the first node to the second node, and the source channel identifier of the first bearer represents an identifier of transmission of the data information from the first node to the second node. The first node is not limited to a source node and the second node is not limited to a target node. In some designs, the first transmission channel may have only one channel identifier, and a source channel identifier or a target channel identifier is not distinguished. In this case, the source channel identifier in the first request message is a channel identifier of a corresponding channel, and is not distinguished one by one in the following.

S507: The service layer and the access layer of the second node determine a QoS parameter and a mapping relationship between the first transmission channel and the first bearer.

S508: The service layer of the second node sends the first response message to the service layer of the first node. Correspondingly, the service layer of the first node receives the first response message.

For example, the first response message includes at least one piece of the following confirmation information: the address information of the first transmission channel, a target channel identifier of the first transmission channel, and a target channel identifier of the first bearer associated with the first transmission channel. Optionally, the first response message may further include the source channel identifier of the first transmission channel and the source channel identifier of the first bearer associated with the first transmission channel.

It should be understood that the target channel identifier described herein represents only a transmission direction of data information. For example, the target channel identifier of the first transmission channel represents an identifier of transmission of the data information from the second node to the first node, and the target channel identifier of the first bearer represents an identifier of transmission of the data information from the second node to the first node. The first node is not limited to a source node and the second node is not limited to a target node.

S509: The service layer of the first node may establish (or referred to as maintaining) at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type.

S510 (optional): Synchronize the at least one mapping relationship between the service layer of the first node and the access layer of the first node. For example, when S510 is implemented, the service layer of the first node may send indication information to the access layer of the first node, where the indication information may indicate the at least one mapping relationship.

S511 (optional): Synchronize the at least one mapping relationship between the service layer of the first node and the application layer of the first node. For example, when S511 is implemented, the service layer of the first node may send indication information to the application layer of the first node, where the indication information may indicate the at least one mapping relationship.

It should be noted that in this embodiment of this application, the service layer of the first node may separately synchronize the maintained at least one mapping relationship to the access layer and the application layer of the first node. Alternatively, the service layer of the first node may record complete information about each mapping relationship, and separately send the information to the access layer or the application layer based on a requirement of the access layer or the application layer, to indicate a mapping relationship between the established first transmission channel and other information. For example, the first transmission channel is bound to the first bearer, and the access layer of the first node needs to know a mapping relationship between the first transmission channel and the first bearer, so as to send, by using a corresponding air interface, data that passes through the first transmission channel and the first bearer. Therefore, the service layer of the first node may need to notify the access layer of the first node of the mapping relationship between the first transmission channel and the first bearer. Usually, after establishing the at least one mapping relationship, the service layer of the first node may send corresponding indication information to the access layer of the first node. For another example, if a procedure of dynamically establishing the first transmission channel in this embodiment of this application is triggered by the application layer of the first node, the service layer of the first node may need to notify the application layer of the first node of a mapping relationship between the first transmission channel and a corresponding target transmission requirement based on the target transmission requirement provided by the application layer, for example, a mapping relationship between the first transmission channel and a service type, or a mapping relationship between the first transmission channel and a QoS parameter. In this way, when implementing a service, the application layer can know which transmission channel is used to transfer information to a lower layer. Usually, the service layer of the first node may determine, based on whether the second request message from the service layer of the first node is received, whether to perform S511.

S512: The service layer of the first node determines to release or deactivate the first transmission channel, and sends a fifth request message to the second node, where the fifth request message is used to indicate to release or deactivate the first transmission channel. Correspondingly, the service layer of the second node receives the fifth request message.

In this embodiment of this application, when the first transmission channel meets a corresponding release condition or deactivation condition, the service layer of the first node may determine to release or deactivate (in other words, suspend a dynamic channel configuration) the first transmission channel. For example, the release condition or the deactivation condition may include, for example, that no data is transmitted on the first transmission channel within a first time period T. It should be understood that, for the first transmission channel that has been released or deactivated, when the target transmission requirement of the first node is again that a first transmission channel needs to be established, the first transmission channel may be further activated or resumed. Details are not described herein.

Case 2: A first bearer associated with the first transmission channel does not exist between an access layer of the first node and an access layer of the second node.

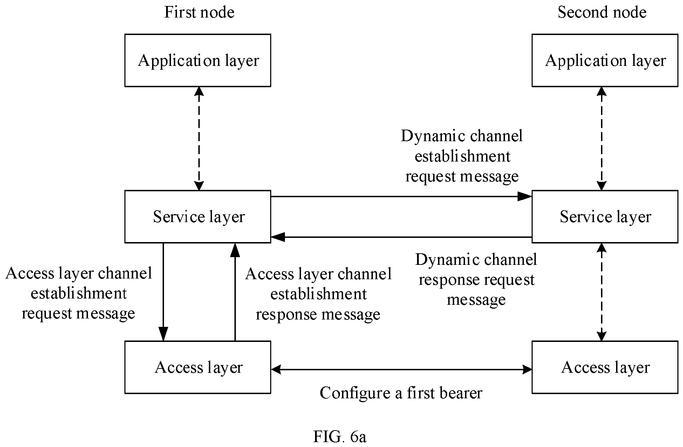

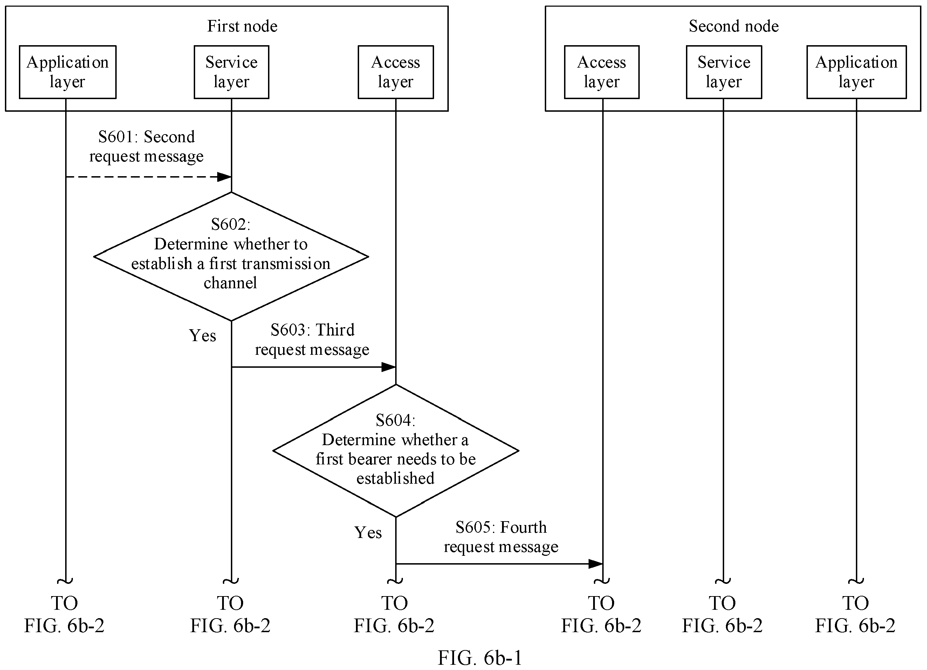

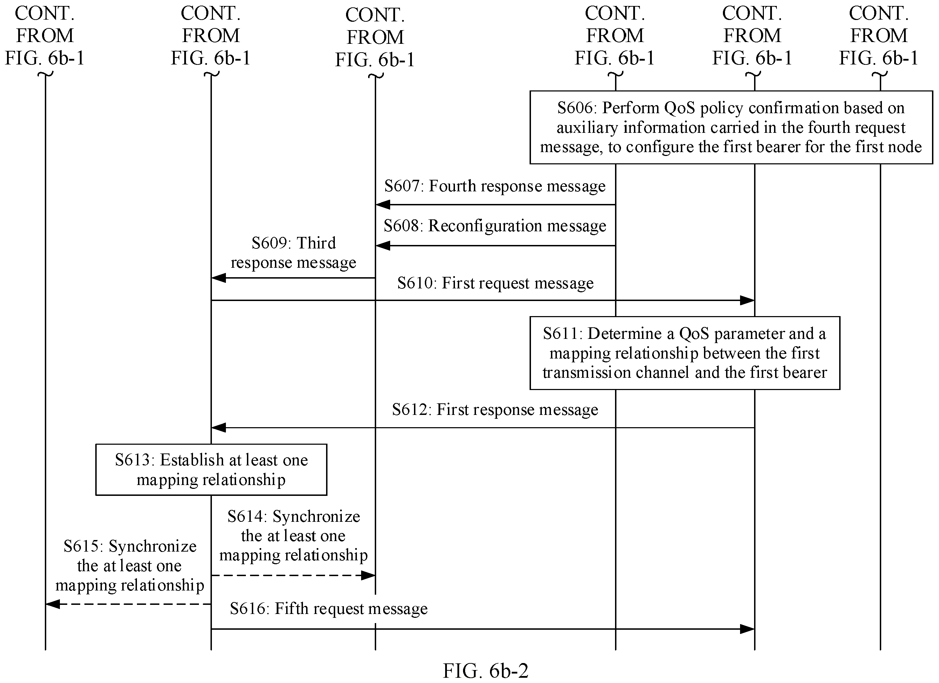

As shown in FIG. 6a, a communication protocol architecture of the first node may include an application layer, a service layer, and an access layer, and a communication protocol architecture of the second node may include an application layer, a service layer, and an access layer. The service layer of the first node may determine whether to establish a first transmission channel. When determining that the first transmission channel needs to be established, the service layer of the first node may send an access layer channel establishment request message to the access layer of the first node, where the access layer channel establishment request message may be used to request to configure a first bearer that meets the target transmission requirement.

The access layer of the first node may first determine, in response to the access layer channel establishment request message, whether the first bearer that meets the target transmission requirement exists. When the first bearer does not exist, the access layer of the first node may report auxiliary information to the access layer of the second node, and receive a reconfiguration message from the access layer of the second node, to configure the first bearer; or the access layer of the first node may receive a reconfiguration message from the access layer from the second node, where the reconfiguration message is used to configure the first bearer.

After the configuration of the first bearer is completed, the access layer of the first node may feed back an access layer channel response message to the service layer of the first node, to notify the service layer of the first node of an available first bearer that meets the target transmission requirement. Further, based on the configured first bearer, the service layer of the first node may send a dynamic channel establishment request message to the service layer of the second node, and receive a dynamic channel establishment response message from the service layer of the second node, to negotiate with the second node and dynamically establish the first transmission channel. Optionally, the first bearer may be associated with a second transmission channel that is configured by default. After the first bearer is established, the second transmission channel may be automatically activated and used for communication between the first node and the second node. It should be understood that dashed arrows in FIG. 6a indicate only information exchange that can be performed between corresponding protocol layers, and do not limit information exchanged.

As shown in FIG. 6b-1 and FIG. 6b-2, the communication method may include the following steps.

In an optional design, the communication method may be triggered by the application layer of the first node. S601 (optional): The application layer of the first node may determine a target transmission requirement of the first node, and determine whether a first transmission channel needs to be established. When determining that the first transmission channel needs to be established, the application layer of the first node may send a second request message to a service layer of the first node. Correspondingly, the service layer of the first node may receive the second request message from the application layer of the first node. The second request message may be used to indicate the target transmission requirement. For example, the second request message may include an application layer QoS parameter. S602: The service layer of the first node may determine, based on the second request message from the service layer of the first node, whether to establish the first transmission channel.

In another optional design, the communication method may be triggered by the service layer of the first node. S602: The service layer of the first node may determine the target transmission requirement of the first node, and determine, based on the target transmission requirement, whether to establish the first transmission channel.

According to a result of determining in S602, when it is determined to establish the first transmission channel, go to S603. When it is determined not to establish the first transmission channel, a transmission channel that already exists between the first node and the second node may be directly reused based on the target transmission requirement of the first node.

S603: The service layer of the first node sends a third request message to the access layer of the first node, where the third request message is used to request to configure a first bearer that meets the target transmission requirement. Correspondingly, the access layer of the first node receives the third request message from the service layer of the first node.

S604: The access layer of the first node determines, based on the third request message, whether the first bearer needs to be established.

For example, the access layer of the first node may determine, from a preconfigured or predefined bearer of the first node and the second node, whether the first bearer that meets the target transmission requirement exists.

If the first bearer does not exist, the first bearer needs to be established. In this case, S605 is performed, where the access layer of the first node negotiates with the second node to configure the first bearer.

When the first node negotiates with the second node to configure the first bearer, the negotiation procedure may be triggered by a request of the first node, or may be actively configured by the second node for the first node, and includes the following steps.

Example 1: The first node requests, based on the target transmission requirement, the second node to configure the first bearer.

S605: The access layer of the first node sends a fourth request message to the access layer of the second node, where the fourth request message is used to request to configure the first bearer. Correspondingly, the access layer of the second node receives the fourth request message.

For example, the fourth request message may include one or more pieces of the following auxiliary information: a service type of a first service, including but not limited to device discovery, service discovery, connection management, QoS management, security management, 5G convergence, multi-domain coordination, measurement management, and the like; an identifier of the QoS parameter (for example, an XQI value, where each XQI value may correspond to one group of QoS parameters, as shown in Table 1 below); and a service feature of the first service, including but not limited to a sampling rate, coding, and the like.

**Table 1**

| XQI value | Default priority | Packet delay budget | Packet error rate | Typical service |
|---|---|---|---|---|
| 1 | 2 | 4 ms | 10⁻⁵ | Intelligent streaming media rear-view mirror; |
| | | | | 360-degree view system |
| 2 | 1 | 20 us | 10⁻⁵ | Active noise reduction service |
| 3 | 5 | 2 ms | 10⁻⁵ | In-vehicle call; |
| | | | | in-vehicle interactive screen projection |
| 4 | 3 | 15 ms | 10⁻⁵ | Vehicle-mounted audio playing |
| 5 | 4 | 25 ms | 10⁻⁵ | Vehicle-mounted hands-free call |
| 6 | 6 | 100 ms | 10⁻³ | Smart key; |
| | | | | tire pressure monitoring |
| 7 | 7 | 1 ms | 10⁻⁶ | Reserved |
| 8 | 8 | 2 ms | 10⁻⁶ | Reserved |
| 9 | 9 | 0.5 ms | 10⁻⁸ | Reserved |

In Table 1, an "XQI value" in each row is one identifier, a "default priority", a "packet delay budget", and a "packet error rate" are a group of QoS parameters corresponding to the XQI value, and a "typical service" represents examples of some services whose transmission requirements need to correspond to the group of QoS parameters. A "default priority" represents relative importance of resource allocation between QoS flows, a packet delay budget represents an upper limit of a time for which a data packet may be delayed, and a packet error rate represents an upper limit of a rate of the data packet. It should be noted that in this embodiment of this application, the group of QoS parameters corresponding to the XQI value may further include a delay jitter, a throughput rate, and the like. Details are not described herein.

S606: Perform QoS policy confirmation between the access layer, the service layer, and the application layer of the second node based on the auxiliary information carried in the fourth request message, to configure the first bearer for the first node.

S607: The access layer of the second node sends a fourth response message to the access layer of the first node, where the fourth response message is used to confirm configuration of the first bearer.

Example 2: The second node actively delivers a reconfiguration message to the first node to configure the first bearer.

S608: The access layer of the second node sends a reconfiguration message to the access layer of the first node. Correspondingly, the access layer of the first node receives the reconfiguration message from the access layer of the second node. The reconfiguration message is used to indicate to configure the first bearer.

It should be noted that, in this embodiment of this application, when registering with or granted by the second node side, the first node may report some basic parameters of the first node, for example, a node type, a service type, a QoS parameter, user class information, and control offloading information. When the second node actively triggers a dynamic channel establishment procedure, the second node may actively configure a first bearer for the first node based on a related parameter previously reported by the first node, and deliver a reconfiguration message to the first node, so that the first node may bind the first bearer to a first transmission channel to be established, thereby dynamically establishing the first transmission channel.

S609: Further, the access layer of the first node sends a third response message to the service layer of the first node, where the third response message is used to confirm configuration of the first bearer. Correspondingly, the service layer of the first node receives the third response message from the access layer of the first node. For example, the third response message includes an identifier of the first bearer.

S610: The service layer of the first node sends the first request message to the service layer of the second node. Correspondingly, the service layer of the second node receives the first request message. For detailed implementation, refer to the foregoing related description of S506. Details are not described herein again.

S611: The service layer and the access layer of the second node determine a QoS parameter and a mapping relationship between the first transmission channel and the first bearer. For detailed implementation, refer to the foregoing related description of S507. Details are not described herein again.

S612: The service layer of the second node sends the first response message to the service layer of the first node. Correspondingly, the service layer of the first node receives the first response message. For detailed implementation, refer to the foregoing related description of S508. Details are not described herein again.

S613: The service layer of the first node establishes at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type.

S614 (optional): Synchronize the at least one mapping relationship between the service layer of the first node and the access layer of the first node. For detailed implementation, refer to the foregoing related description of S510. Details are not described herein again.

S615 (optional): Synchronize the at least one mapping relationship between the service layer of the first node and the application layer of the first node. For detailed implementation, refer to the foregoing related description of S511. Details are not described herein again.

S616: The service layer of the first node determines to release or deactivate the first transmission channel, and sends a fifth request message to the second node, where the fifth request message is used to indicate to release or deactivate the first transmission channel. Correspondingly, the service layer of the second node receives the fifth request message. For specific implementation, refer to the foregoing related description of S512. Details are not described herein again.

Therefore, according to the method flowcharts shown in FIG. 5b-1, FIG. 5b-2, FIG. 6b-1, and FIG. 6b-2, the service layer of the first node may negotiate with the second node based on the target transmission requirement of the first node, to dynamically establish the first transmission channel, and does not statically occupy a transmission resource. This helps improve transmission resource utilization efficiency, and can further meet various different transmission requirements, to adapt to more diversified transmission scenarios.

In addition, it should be noted that, in embodiments shown in FIG. 5b-1, FIG. 5b-2, FIG. 6b-1, and FIG. 6b-2 in this application, the service layer of the first node may further allocate a default second transmission channel (not shown in the figure) to each of functions such as service discovery, multi-domain convergence, and 5G convergence on a control plane, to provide a basic transmission service. These second transmission channels are static channels, and are activated by default after an access layer bearer (for example, a first bearer) is established, so that a corresponding service can be quickly provided. In other words, in this embodiment of this application, the first bearer may be associated with the second transmission channel that is configured by default and/or the first transmission channel that is dynamically established, to adapt to more diversified transmission scenarios.

Case 3: In a converged communication scenario based on a first communication technology and a second communication technology, the service layer of the first node supports at least two protocol stacks, and at least two transmission channels (including the first transmission channel that is dynamically established and the second transmission channel that is configured by default) associated with the first bearer are respectively used to transmit data packets based on the at least two protocol stacks.

The communication system shown in FIG. 3 is used as an example. For a to business (To Business, TOB) service such as a smart manufacturing scenario or an industrial field network scenario, the first node may establish, by using the second node, a communication connection to a network (for example, a 5G network) that uses the second communication technology, and an operator may centrally manage short-range nodes (including the first node and/or the second node) by using a 5G core network, including two parts: control plane management and user plane management.

In the control plane management, content exchanged between the short-range node and the 5G core network may include a QoS policy related to registration, session establishment, session management, and the like. In the 5G cellular network converged communication scenario, a related message (for example, a network-attached storage (Network-attached storage, NAS) message) in a registration and QoS policy configuration process may be borne on at least two protocol stacks, for example, a protocol stack of an extensible authentication protocol (Extensible Authentication Protocol, EAP)-5G protocol, a protocol stack of a user datagram protocol (User Datagram Protocol, UDP)/internet protocol (Internet Protocol, IP), and a protocol stack of a user plane part of GPRS tunneling protocol (User Plane Part of GPRS Turning Protocol, GTP-U)/stream control transmission protocol (Stream Control Transmission Protocol, SCTP) protocol, and may be finally sent by using an air interface, a corresponding control plane transmission channel, and an access layer bearer (namely, a link channel).

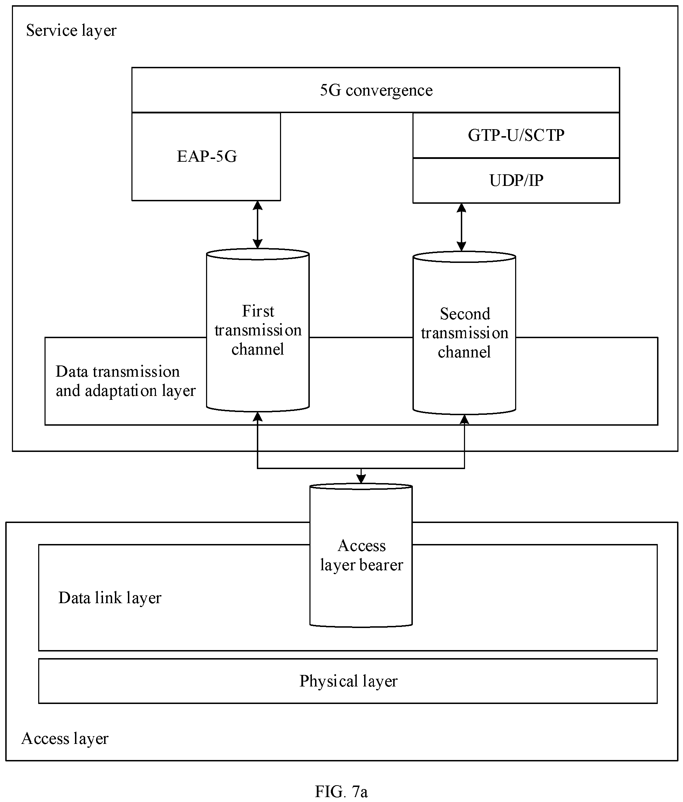

A NAS message is used as an example. As shown in FIG. 7a, to help a receive end identify a protocol stack corresponding to a NAS message after receiving a data packet, in this embodiment of this application, at least two transmission channels (for example, a first transmission channel that is dynamically established and a second transmission channel that is configured by default) associated with a same access layer bearer (for example, a first bearer) may be separately used to transmit data packets based on the at least two protocol stacks. For example, before the first transmission channel associated with the first bearer is dynamically established, the service layer of the first node may encapsulate the NAS message into a data packet of the EAP-5G protocol by using the EAP-5G protocol stack, and transmit the NAS message to the peer node on the second transmission channel associated with the first bearer. After the first transmission channel associated with the first bearer is dynamically established, the service layer of the first node may encapsulate the NAS message into a data packet of the UDP/IP protocol by using the UDP/IP protocol stack, and transmit the NAS message to the peer node on the first transmission channel. Correspondingly, after receiving the data packet from the first transmission channel or the second transmission channel, the service layer of the peer node parses the data packet, and submits the parsed data packet to the UDP/IP protocol stack or the EAP-5G protocol stack for further parsing.

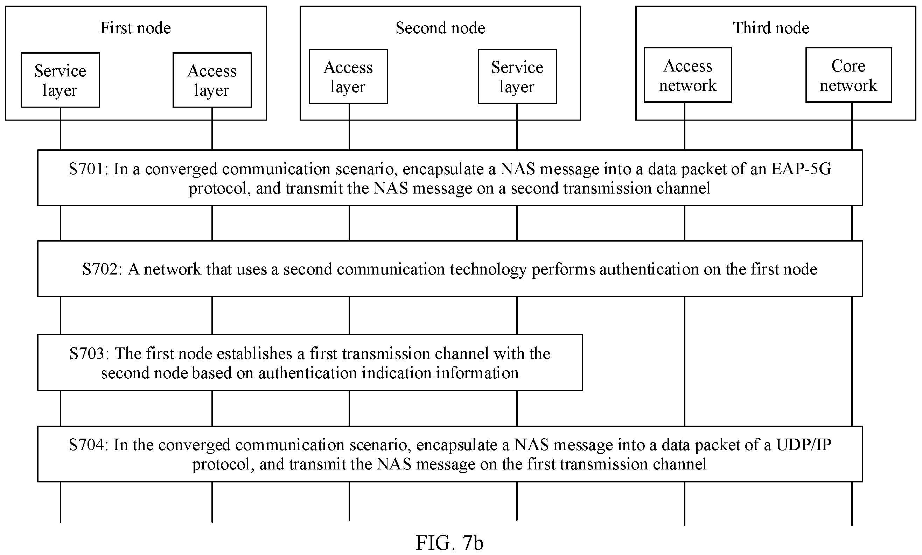

As shown in FIG. 7b, the communication method may include the following steps.

S701: The first node serves as a transmit end, and the service layer of the first node may encapsulate a NAS message into a data packet of the EAP-5G protocol by using the EAP-5G protocol stack, and transmit the NAS message to the second node on a second transmission channel. Correspondingly, after receiving the data packet from the second transmission channel, the service layer of the second node parses the data packet, and submits the parsed data packet to the EAP-5G protocol stack for further parsing.

S702: The first node sends, by using the second node, an authentication request to the network that uses the second communication technology. Correspondingly, the network that uses the second communication technology performs authentication on the first node. When the authentication succeeds, the network that uses the second communication technology may send authentication success indication information to the first node by using the second node, and the target transmission requirement of the first node may include the authentication success indication information.

S703: The first node may establish the first transmission channel with the second node based on the authentication success indication information. For detailed implementation steps, refer to the method steps shown in FIG. 5b-1, FIG. 5b-2, FIG. 6b-1, and FIG. 6b-2 above. Details are not described herein again.

S704: The first node serves as a transmit end, and the service layer of the first node may encapsulate a NAS message into a data packet of the UDP/IP protocol by using the UDP/IP protocol stack, and transmit the NAS message to the second node on the first transmission channel. Correspondingly, after receiving the data packet from the first transmission channel, the service layer of the second node parses the data packet, and submits the parsed data packet to the UDP/IP protocol stack for further parsing.

Therefore, in a converged communication scenario, the first node may determine, based on whether network authentication in the second communication technology succeeds, whether to trigger a procedure of dynamically establishing a first transmission channel, so as to dynamically establish, between the first node and the second node, a transmission channel that can meet a transmission requirement in the converged communication scenario, and configure different protocol stack data to be separately transmitted by using different transmission channels, without statically occupying a transmission resource. This helps improve transmission resource utilization and adapt to more diversified transmission scenarios, and further, the peer node can accurately identify protocol stacks corresponding to data packets transmitted on different transmission channels.

Case 4: In a converged communication scenario based on the first communication technology and the second communication technology, the service layer of the first node supports at least two protocol stacks, and a same transmission channel may be reused by data packets based on the at least two protocol stacks. The data packets of the at least two protocol stacks include indication information, and the indication information indicates an association relationship between a data packet and a protocol stack.

The communication system and the NAS message shown in FIG. 3 are still used as an example. In a 5G cellular network converged communication scenario, a NAS message in a registration and QoS policy configuration process may be borne in at least two protocol stacks, for example, an EAP-5G protocol stack, a UDP/IP protocol stack, and a GTP-U/SCTP protocol stack, and may be finally sent by using an air interface, a corresponding control plane transmission channel, and an access layer bearer (namely, a link channel).

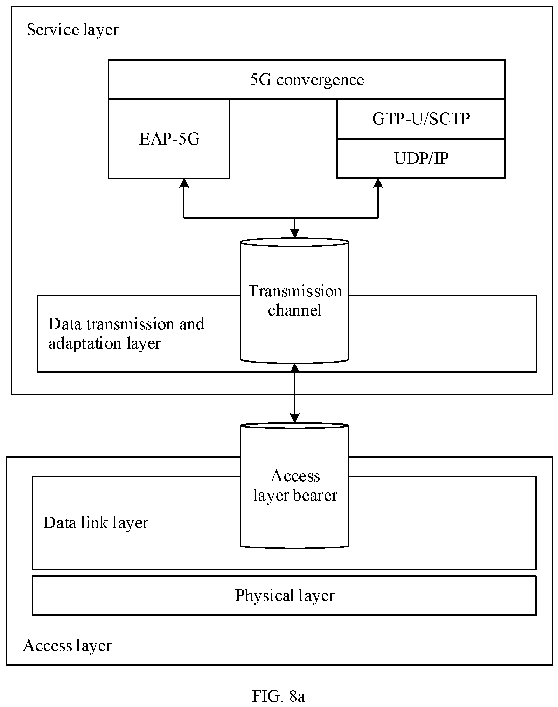

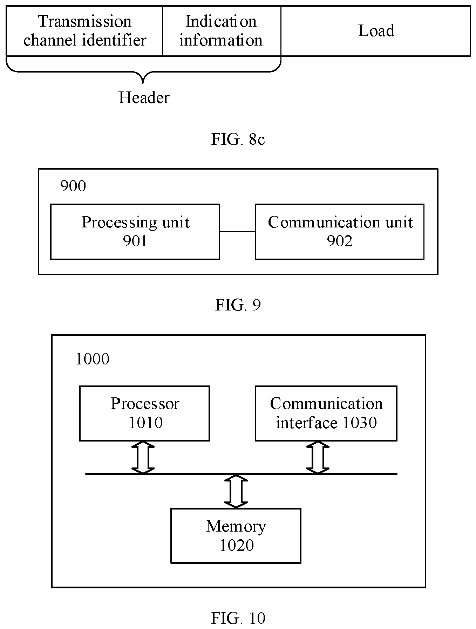

In a possible design, as shown in FIG. 8a, to help a receive end identify a protocol stack corresponding to a NAS message after receiving a data packet, in this embodiment of this application, a same transmission channel (for example, a first transmission channel or a second transmission channel) may be reused by data packets based on the at least two protocol stacks. A corresponding functional unit (for example, a data transmission and adaptation layer) of a service layer may add bit information (namely, indication information) to a data packet after receiving the data packet from an upper-layer protocol stack, the indication information may indicate an association relationship between the data packet and the protocol stack, and a corresponding frame structure is shown in FIG. 8c.

At a transmit end (for example, the first node), after receiving a PDU from an upper-layer protocol stack (for example, an EAP-5G protocol stack or a UDP/IP protocol stack), a data transmission and adaptation layer of a service layer may use the PDU as a current-layer payload (payload), add a header (header) before the payload to obtain a to-be-transmitted data packet of a current layer, and submit the data packet to a corresponding transmission channel for transmission. The header may include a transmission channel identifier (Transmission Channel Identifier, TCID) and indication information. The TCID is used to indicate a transmission channel corresponding to a data packet, and the indication information indicates an association relationship between a data packet and a protocol stack. At a receive end (for example, the second node), the service layer may parse a received data packet to obtain indication information in a header, to determine a subsequent routing direction, to be specific, to submit a payload obtained by parsing the data packet to the EAP-5G protocol stack or the UDP/IP protocol stack.

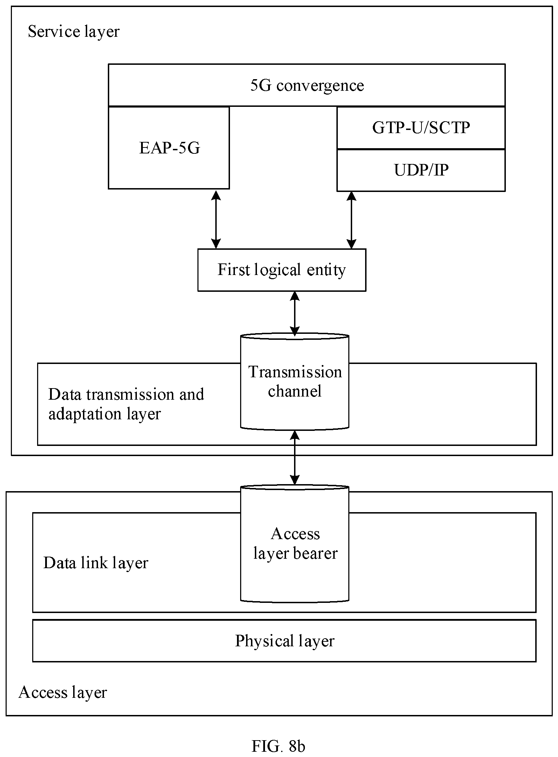

In another possible design, as shown in FIG. 8b, to reduce changes to a service layer and an existing protocol as much as possible, in this embodiment of this application, a first logical entity may be added to a lower layer of the at least two protocol stacks and an upper layer of the data transmission and adaptation layer at the service layer. The first logical entity may receive a data packet from an upper-layer protocol stack, and add indication information to the data packet. The indication information indicates an association relationship between the data packet and the protocol stack, and a corresponding frame structure may be a part that does not include a transmission channel identifier in FIG. 8c. A manner of adding the indication information and a corresponding data packet frame structure are not limited in this embodiment of this application.

It should be noted that the peer node (for example, the second node) parses, in a same manner, a data packet submitted by a lower layer, for example, by using the data transmission and adaptation layer or a newly added second logical entity (that corresponds to the first logical entity), to learn, by using indication information obtained through parsing, an upper-layer protocol stack to which the data packet needs to be submitted. Details are not described herein. Therefore, in the foregoing embodiment, in a converged communication scenario, when the first node supports at least two protocol stacks, the first node may add indication information to a data packet header, so that the at least two protocol stacks can reuse a same transmission channel, to reduce occupation of transmission resources. In addition, the indication information is used to indicate the association relationship between the data packet and the protocol stack, so that when receiving and parsing the data packet, the peer node can accurately identify the protocol stack corresponding to the data packet.

An embodiment of this application further provides a communication apparatus, configured to perform the communication method performed by the first node or the second node in the foregoing embodiments. For related features, refer to the foregoing method embodiments. Details are not described herein again.

As shown in FIG. 9, the apparatus 900 may be configured to perform the communication method performed by the first node. For example, a processing unit 901 is configured to: determine a target transmission requirement of the first node; and determine, based on the target transmission requirement, whether to establish a first transmission channel, where the first transmission channel is used to communicate with a second node; and a communication unit 902 is configured to: send a first request message to the second node, where the first request message is used to request to establish the first transmission channel; and receive a first response message from the second node, where the first response message is used to confirm establishment of the first transmission channel. For a specific implementation, refer to related descriptions in embodiments shown in FIG. 1 to FIG. 8c. Details are not described herein again.

In an optional design, the apparatus 900 may be configured to perform the communication method performed by the second node. For example, a communication unit 902 is configured to: receive a first request message from a first node, where the first request message is used to request to establish a first transmission channel, the first transmission channel is used to communicate with the second node, and the first transmission channel is associated with a target transmission requirement of the first node; and send a first response message to the first node, where the first response message is used to confirm establishment of the first transmission channel. For a specific implementation, refer to related descriptions in embodiments shown in FIG. 1 to FIG. 8c. Details are not described herein again.

It should be noted that, in embodiments of this application, division into the units is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the solutions, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the method described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

In a simple embodiment, a person skilled in the art may figure out that the communication apparatus in the foregoing embodiments may be in a form shown in FIG. 10.

An apparatus 1000 shown in FIG. 10 includes at least one processor 1010 and a memory 1020, and optionally, may further include a communication interface 1030.

In this embodiment of this application, a specific connection medium between the processor 1010 and the memory 1020 is not limited.

In the apparatus shown in FIG. 10, when communicating with another device, the processor 1010 may perform data transmission by using the communication interface 1030.

When the communication apparatus uses the form shown in FIG. 10, the processor 1010 in FIG. 10 may invoke computer-executable instructions stored in the memory 1020, so that the device 1000 can perform the method performed by the communication apparatus in any one of the foregoing method embodiments.

An embodiment of this application further relates to a chip system. The chip system includes a processor, configured to invoke a computer program or computer instructions stored in a memory, so that the processor performs the method in any one of the foregoing method embodiments.

In a possible implementation, the processor is coupled to the memory by using an interface.

In a possible implementation, the chip system further includes a memory, and the memory stores a computer program or computer instructions.

An embodiment of this application further relates to a computer-readable storage medium. The computer-readable storage medium stores program code. When the program code runs on a computer, the computer is enabled to perform the method in any one of the foregoing method embodiments.

An embodiment of this application further relates to a computer program product. When the computer program product runs on a computer, the computer is enabled to perform the method in any one of the foregoing method embodiments.

An embodiment of this application further relates to a processor. The processor is configured to invoke a computer program or computer instructions stored in a memory, so that the processor performs the method in any one of the foregoing method embodiments.

The processor mentioned anywhere above may be a general-purpose central processing unit, a microprocessor, an application-specific integrated circuit (application-specific integrated circuit, ASIC), or one or more integrated circuits for controlling program execution of the method in any one of the foregoing method embodiments. The memory mentioned anywhere above may be a read-only memory (read-only memory, ROM), another type of static storage device that can store static information and instructions, a random access memory (random access memory, RAM), or the like.

It should be understood that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A communication method, wherein the method is applied to a first node, and comprises:
determining a target transmission requirement of the first node;
determining, based on the target transmission requirement, whether to establish a first transmission channel, wherein the first transmission channel is used to communicate with a second node;
sending a first request message to the second node, wherein the first request message is used to request to establish the first transmission channel; and
receiving a first response message from the second node, wherein the first response message is used to confirm establishment of the first transmission channel.

2. The method according to claim 1, wherein the target transmission requirement comprises one or more pieces of the following information: a quality of service QoS parameter, a transmission channel parameter, user class information, control plane load information, user plane load information, control offloading information, a service type of a first service, or service feature information of the first service.

3. The method according to claim 1 or 2, wherein the first request message comprises at least one piece of the following configuration information: address information of the first transmission channel, a source channel identifier of the first transmission channel, a source channel identifier of a first bearer associated with the first transmission channel, and an identifier of the QoS parameter.

4. The method according to any one of claims 1 to 3, wherein the first response message comprises at least one piece of the following confirmation information: the address information of the first transmission channel, a target channel identifier of the first transmission channel, and a target channel identifier of the first bearer associated with the first transmission channel.

5. The method according to any one of claims 1 to 4, wherein a communication protocol architecture of the first node comprises an application layer, a service layer, and an access layer.

6. The method according to claim 5, wherein the determining, based on the target transmission requirement, to establish a first transmission channel comprises:
determining, by the service layer based on the target transmission requirement, to establish the first transmission channel; or
determining, by the service layer based on a second request message from the application layer, to establish the first transmission channel, wherein the second request message is used to indicate the target transmission requirement.

7. The method according to claim 5 or 6, wherein the method further comprises:
sending, by the service layer, a third request message to the access layer, wherein the third request message is used to request to configure the first bearer associated with the first transmission channel; and
receiving, by the service layer, a third response message from the access layer, wherein the third response message is used to confirm configuration of the first bearer.

8. The method according to claim 7, wherein the method further comprises:
receiving, by the access layer, the third request message from the service layer; and
determining, by the access layer, the first bearer from a preconfigured or predefined bearer of the first node and the second node.

9. The method according to claim 7, wherein a communication protocol architecture of the second node comprises an access layer, and the method further comprises:
receiving, by the access layer of the first node, the third request message from the service layer of the first node;
sending, by the access layer of the first node, a fourth request message to the access layer of the second node based on the third request message, wherein the fourth request message is used to request to configure the first bearer;
receiving, by the access layer of the first node, a fourth response message from the access layer of the second node, wherein the fourth response message is used to confirm configuration of the first bearer; and
sending, by the access layer of the first node, the third response message to the service layer of the first node based on the fourth response message.

10. The method according to claim 7, wherein a communication protocol architecture of the second node comprises an access layer, and the method further comprises:
receiving, by the access layer of the first node, the third request message from the service layer of the first node;
receiving, by the access layer of the first node, a reconfiguration message from the access layer of the second node, wherein the reconfiguration message is used to indicate to configure the first bearer; and
sending, by the access layer of the first node, the third response message to the service layer of the first node based on the reconfiguration message.

11. The method according to any one of claims 5 to 10, wherein the communication protocol architecture of the second node comprises a service layer, and the sending a first request message to the second node comprises:
sending, by the service layer of the first node, the first request message to the service layer of the second node; and
the receiving a first response message from the second node comprises:
receiving, by the service layer of the first node, the first response message from the second node.

12. The method according to any one of claims 5 to 11, wherein the method further comprises:
establishing, by the service layer of the first node, at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type.

13. The method according to claim 12, wherein the method further comprises:
synchronizing the at least one mapping relationship between the service layer of the first node and the access layer and/or the application layer of the first node.

14. The method according to any one of claims 5 to 13, wherein the service layer of the first node supports at least two protocol stacks, and the first transmission channel is reused by data packets based on the at least two protocol stacks, wherein the data packets of the at least two protocol stacks comprise indication information, and the indication information indicates an association relationship between a data packet and a protocol stack; or
the first bearer is associated with a second transmission channel that is configured by default, and data packets based on the at least two protocol stacks are separately transmitted to the second node through the first transmission channel and the second transmission channel.

15. The method according to claim 14, wherein the indication information is added to the data packets based on the at least two protocol stacks by using a data transmission and adaptation layer of the first node, and the data transmission and adaptation layer is located at a lower layer of the at least two protocol stacks at the service layer of the first node; or
the indication information is added to the data packets based on the at least two protocol stacks by using a first logical entity in the first node, wherein the first logical entity is located at a lower layer of the at least two protocol stacks and an upper layer of the data transmission and adaptation layer at the service layer of the first node.

16. The method according to any one of claims 1 to 15, wherein the first node supports a first communication technology, the second node supports the first communication technology and a second communication technology, the first communication technology is different from the second communication technology, and the method further comprises:
sending, by the first node by using the second node, an authentication request to a network that uses the second communication technology; and
receiving, by the first node by using the second node, authentication success indication information from the network that uses the second communication technology, wherein the target transmission requirement comprises the authentication success indication information.

17. The method according to any one of claims 1 to 16, wherein the method further comprises:
determining to release or deactivate the first transmission channel; and
sending a fifth request message to the second node, wherein the fifth request message is used to indicate to release or deactivate the first transmission channel.

18. A communication method, wherein the method is applied to a second node, and comprises:
receiving a first request message from a first node, wherein the first request message is used to request to establish a first transmission channel, the first transmission channel is used to communicate with the second node, and the first transmission channel is associated with a target transmission requirement of the first node; and
sending a first response message to the first node, wherein the first response message is used to confirm establishment of the first transmission channel.

19. The method according to claim 18, wherein the target transmission requirement comprises one or more pieces of the following information: a quality of service QoS parameter, a transmission channel parameter, user class information, control plane load information, user plane load information, control offloading information, a service type of a first service, or service feature information of the first service.

20. The method according to claim 18 or 19, wherein the first request message comprises at least one piece of the following configuration information: address information of the first transmission channel, a source channel identifier of the first transmission channel, a source channel identifier of a first bearer associated with the first transmission channel, and an identifier of the QoS parameter.

21. The method according to any one of claims 18 to 20, wherein the first response message comprises at least one piece of the following confirmation information: the address information of the first transmission channel, a target channel identifier of the first transmission channel, and a target channel identifier of the first bearer associated with the first transmission channel.

22. The method according to any one of claims 18 to 21, wherein a communication protocol architecture of the first node comprises an access layer, a communication protocol architecture of the second node comprises an access layer, and the method further comprises:
receiving, by the access layer of the second node, a fourth request message from the access layer of the first node, wherein the fourth request message is used to request to configure the first bearer associated with the first transmission channel; and
sending, by the access layer of the second node, a fourth response message to the access layer of the first node, wherein the fourth response message is used to confirm configuration of the first bearer.

23. The method according to any one of claims 18 to 22, wherein a communication protocol architecture of the first node comprises an access layer, a communication protocol architecture of the second node comprises an access layer, and the method further comprises:
sending, by the access layer of the second node, a reconfiguration message to the access layer of the first node, wherein the reconfiguration message is used to indicate to configure the first bearer associated with the first transmission channel.

24. The method according to any one of claims 18 to 23, wherein the communication protocol architecture of the first node comprises a service layer, and the communication protocol architecture of the second node comprises a service layer;
the receiving a first request message from a first node comprises:
receiving, by the service layer of the second node, the first request message from the service layer of the first node; and
the sending a first response message to the first node comprises:
sending, by the service layer of the second node, the first response message to the service layer of the first node.

25. The method according to any one of claims 18 to 24, wherein the first node supports a first communication technology, the second node supports the first communication technology and a second communication technology, the first communication technology is different from the second communication technology, and the method further comprises:
sending an authentication request from the first node to a network that uses the second communication technology; and
sending, to the first node, authentication success indication information from the network that uses the second communication technology, wherein the target transmission requirement comprises the authentication success indication information.

26. The method according to any one of claims 18 to 25, wherein the method further comprises:
receiving a fifth request message from the first node, wherein the fifth request message is used to indicate to release or deactivate the first transmission channel.

27. A communication apparatus, comprising:
a processing unit, configured to: determine a target transmission requirement of the first node; and determine, based on the target transmission requirement, whether to establish a first transmission channel, wherein the first transmission channel is used to communicate with a second node; and
a communication unit, configured to: send a first request message to the second node, wherein the first request message is used to request to establish the first transmission channel; and receive a first response message from the second node, wherein the first response message is used to confirm establishment of the first transmission channel.

28. The apparatus according to claim 27, wherein the target transmission requirement comprises one or more pieces of the following information: a quality of service QoS parameter, a transmission channel parameter, user class information, control plane load information, user plane load information, control offloading information, a service type of a first service, or service feature information of the first service.

29. The apparatus according to claim 27 or 28, wherein the first request message comprises at least one piece of the following configuration information: address information of the first transmission channel, a source channel identifier of the first transmission channel, a source channel identifier of a first bearer associated with the first transmission channel, and an identifier of the QoS parameter.

30. The apparatus according to any one of claims 27 to 29, wherein the first response message comprises at least one piece of the following confirmation information: the address information of the first transmission channel, a target channel identifier of the first transmission channel, and a target channel identifier of the first bearer associated with the first transmission channel.

31. The apparatus according to any one of claims 27 to 30, wherein a communication protocol architecture of the first node comprises an application layer, a service layer, and an access layer.

32. The apparatus according to claim 31, wherein the processing unit is configured to: determine, by using the service layer based on the target transmission requirement, to establish the first transmission channel; or determine, by using the service layer based on a second request message from the application layer, to establish the first transmission channel, wherein the second request message is used to indicate the target transmission requirement.

33. The apparatus according to claim 31 or 32, wherein the communication unit is further configured to: send, by using the service layer, a third request message to the access layer, wherein the third request message is used to request to configure the first bearer associated with the first transmission channel; and receive, by using the service layer, a third response message from the access layer, wherein the third response message is used to confirm configuration of the first bearer

34. The apparatus according to claim 33, wherein the communication unit is further configured to: receive, by using the access layer, the third request message from the service layer; and the processing unit is further configured to: determine, by using the access layer, the first bearer from a preconfigured or predefined bearer of the first node and the second node.

35. The apparatus according to claim 33, wherein a communication protocol architecture of the second node comprises an access layer, and the communication unit is further configured to: receive, by using the access layer of the first node, the third request message from the service layer of the first node; send, by using the access layer of the first node, a fourth request message to the access layer of the second node based on the third request message, wherein the fourth request message is used to request to configure the first bearer; receive, by using the access layer of the first node, a fourth response message from the access layer of the second node, wherein the fourth response message is used to confirm configuration of the first bearer; and send, by using the access layer of the first node, the third response message to the service layer of the first node based on the fourth response message.

36. The apparatus according to claim 33, wherein a communication protocol architecture of the second node comprises an access layer, and the communication unit is further configured to: receive, by using the access layer of the first node, the third request message from the service layer of the first node; receive, by using the access layer of the first node, a reconfiguration message from the access layer of the second node, wherein the reconfiguration message is used to indicate to configure the first bearer; and send, by using the access layer of the first node, the third response message to the service layer of the first node based on the reconfiguration message.

37. The apparatus according to any one of claims 31 to 36, wherein the communication protocol architecture of the second node comprises a service layer, and the communication unit is configured to: send, by using the service layer of the first node, the first request message to the service layer of the second node; and receive, by using the service layer of the first node, the first response message from the second node.

38. The apparatus according to any one of claims 31 to 37, wherein the processing unit is further configured to: establish, by using the service layer of the first node, at least one of the following mapping relationships: a mapping relationship between the first transmission channel and the service type, a mapping relationship between the first transmission channel and the QoS parameter, a mapping relationship between the first transmission channel and the associated first bearer, and a mapping relationship between the first transmission channel and a node type.

39. The apparatus according to claim 38, wherein the processing unit is further configured to: synchronize the at least one mapping relationship between the service layer of the first node and the access layer and/or the application layer of the first node.

40. The apparatus according to any one of claims 31 to 39, wherein the service layer of the first node supports at least two protocol stacks, and the first transmission channel is reused by data packets based on the at least two protocol stacks, wherein the data packets of the at least two protocol stacks comprise indication information, and the indication information indicates an association relationship between a data packet and a protocol stack; or the first bearer is associated with a second transmission channel that is configured by default, and data packets based on the at least two protocol stacks are separately transmitted to the second node through the first transmission channel and the second transmission channel.

41. The apparatus according to claim 40, wherein the indication information is added to the data packets based on the at least two protocol stacks by using a data transmission and adaptation layer of the first node, and the data transmission and adaptation layer is located at a lower layer of the at least two protocol stacks at the service layer of the first node; or
the indication information is added to the data packets based on the at least two protocol stacks by using a first logical entity in the first node, wherein the first logical entity is located at a lower layer of the at least two protocol stacks and an upper layer of the data transmission and adaptation layer at the service layer of the first node.

42. The apparatus according to any one of claims 27 to 41, wherein the first node supports a first communication technology, the second node supports the first communication technology and a second communication technology, the first communication technology is different from the second communication technology, and the communication unit is further configured to: send, by using the second node, an authentication request to a network that uses the second communication technology; and receive, by using the second node, authentication success indication information from the network that uses the second communication technology, wherein the target transmission requirement comprises the authentication success indication information.

43. The apparatus according to any one of claims 27 to 42, wherein the processing unit is further configured to: determine to release or deactivate the first transmission channel; and the communication unit is further configured to: send a fifth request message to the second node, wherein the fifth request message is used to indicate to release or deactivate the first transmission channel.

44. A communication apparatus, comprising:
a communication unit, configured to: receive a first request message from a first node, wherein the first request message is used to request to establish a first transmission channel, the first transmission channel is used to communicate with a second node, and the first transmission channel is associated with a target transmission requirement of the first node; and send a first response message to the first node, wherein the first response message is used to confirm establishment of the first transmission channel.

45. The apparatus according to claim 44, wherein the target transmission requirement comprises one or more pieces of the following information: a quality of service QoS parameter, a transmission channel parameter, user class information, control plane load information, user plane load information, control offloading information, a service type of a first service, or service feature information of the first service.

46. The apparatus according to claim 44 or 45, wherein the first request message comprises at least one piece of the following configuration information: address information of the first transmission channel, a source channel identifier of the first transmission channel, a source channel identifier of a first bearer associated with the first transmission channel, and an identifier of the QoS parameter.

47. The apparatus according to any one of claims 44 to 46, wherein the first response message comprises at least one piece of the following confirmation information: the address information of the first transmission channel, a target channel identifier of the first transmission channel, and a target channel identifier of the first bearer associated with the first transmission channel.

48. The apparatus according to any one of claims 44 to 47, wherein a communication protocol architecture of the first node comprises an access layer, a communication protocol architecture of the second node comprises an access layer, and the communication unit is further configured to: receive, by using the access layer of the second node, a fourth request message from the access layer of the first node, wherein the fourth request message is used to request to configure the first bearer associated with the first transmission channel; and send, by using the access layer of the second node, a fourth response message to the access layer of the first node, wherein the fourth response message is used to confirm configuration of the first bearer

49. The apparatus according to any one of claims 44 to 48, wherein a communication protocol architecture of the first node comprises an access layer, a communication protocol architecture of the second node comprises an access layer, and the communication unit is further configured to: send, by using the access layer of the second node, a reconfiguration message to the access layer of the first node, wherein the reconfiguration message is used to indicate to configure the first bearer associated with the first transmission channel.

50. The apparatus according to any one of claims 44 to 49, wherein the communication protocol architecture of the first node comprises a service layer, and the communication protocol architecture of the second node comprises a service layer; and the communication unit is configured to: receive, by using the service layer of the second node, the first request message from the service layer of the first node; and send, by using the service layer of the second node, the first response message to the service layer of the first node.

51. The apparatus according to any one of claims 44 to 50, wherein the first node supports a first communication technology, the second node supports the first communication technology and a second communication technology, the first communication technology is different from the second communication technology, and the communication unit is further configured to: send an authentication request from the first node to a network that uses the second communication technology; and send, to the first node, authentication success indication information from the network that uses the second communication technology, wherein the target transmission requirement comprises the authentication success indication information.

52. The apparatus according to any one of claims 44 to 51, wherein the communication unit is further configured to: receive a fifth request message from the first node, wherein the fifth request message is used to indicate to release or deactivate the first transmission channel.

53. A communication apparatus, comprising at least one processor and an interface circuit, wherein the interface circuit is configured to provide data or a code instruction for the at least one processor, and the at least one processor is configured to implement the method according to any one of claims 1 to 17 by using a logic circuit or executing the code instruction, or implement the method according to any one of claims 18 to 26.

54. A communication system, comprising a communication apparatus configured to implement the method according to any one of claims 1 to 17, and a communication apparatus configured to implement the method according to any one of claims 18 to 26.

55. A computer-readable storage medium, wherein the computer-readable storage medium stores a computer program; and when the computer program is run on a computer, the computer is enabled to perform the method according to any one of claims 1 to 17, or perform the method according to any one of claims 18 to 26.

56. A computer program product, wherein when the computer program product runs on a computer, the computer is enabled to perform the method according to any one of claims 1 to 17, or perform the method according to any one of claims 18 to 26.
